# EUROPÄISCHE PATENTSCHRIFT

(11) **EP 1 915 795 B1**
(45) Veröffentlichungstag und Bekanntmachung des Hinweises auf die Patenterteilung: **30.03.2011**
(21) Anmeldenummer: 06776636.0
(22) Anmeldetag: 05.08.2006
(51) Int. Cl.: H01M 8/10, H01M 8/02, H01M 2/08

(54) **VERBESSERTE MEMBRAN-ELEKTRODENEINHEITEN UND BRENNSTOFFZELLEN MIT LANGER LEBENSDAUER**
IMPROVED MEMBRANE-ELECTRODE UNITS AND FUEL CELLS HAVING A LONG SERVICE LIFE
UNITES D'ELECTRODE A MEMBRANE AMELIOREES ET PILES A COMBUSTIBLE PRESENTANT UNE PLUS GRANDE DUREE DE VIE

(30) Priorität: 12.08.2005 DE 102005038195
(43) Veröffentlichungstag der Anmeldung: 30.04.2008
(73) Patentinhaber: BASF Fuel Cell Research GmbH, 67056 Ludwigshafen (DE)
(72) Erfinder: UENSAL, Oemer, 55128 Mainz (DE); SCHMIDT, Thomas, 60594 Frankfurt (DE); PADBERG, Christoph, 65195 Wiesbaden (DE); OTT, Detlef, 65843 Sulzbach (DE)
(74) Vertreter: Luderschmidt, Schüler & Partner
(86) Internationale Anmeldenummer: PCT/EP2006/007767
(87) Internationale Veröffentlichungsnummer: WO 2007/019978

(56) Entgegenhaltungen:
- EP-A- 1 429 408
- WO-A-03/096465
- WO-A-2006/008157
- DE-A1- 10 235 360
- US-A1- 2003 091 885

## Beschreibung

Die vorliegende Erfindung betrifft verbesserte Membran-Elektrodeneinheiten und Brennstoffzellen mit langer Lebensdauer, aufweisend zwei elektrochemisch aktive Elektroden, die durch eine Polymer-Elektrolyt-Membran getrennt sind.

In Polymer-Elektrolyt-Membran(PEM)-Brennstoffzellen werden heute als protonenleitende Membranen fast ausschließlich sulfonsäuremodifizierte Polymere eingesetzt. Dabei finden überwiegend perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks auf 80 - 100 °C. Höhere Betriebstemperaturen können ohne einen Verlust an Leistung der Brennstoffzelle nicht realisiert werden. Bei Temperaturen, die für ein gegebenes Druckniveau, oberhalb des Taupunktes von Wasser liegen, trocknet die Membran komplett aus, und die Brennstoffzelle liefert keine elektrische Energie mehr, da der Widerstand der Membran auf so hohe Werte steigt, daß kein nennenswerter Stromfluß mehr erfolgt.

Eine Membran-Elektroden-Einheit mit integrierter Dichtung, die auf der zuvor dargelegten Technologie beruht, wird beispielsweise in US 5,464,700 beschrieben. Dabei sind im äußeren Bereich der Membran-Elektroden-Einheit, auf den nicht durch die Elektroden abgedeckten Flächen der Membran Filme aus Elastomeren vorgesehen, die zugleich die Dichtung zu den Bipolarplatten und zum Außenraum darstellen.

Durch diese Maßnahme kann eine Ersparnis an sehr kostspieligem Membranmaterial erzielt werden. Weitere Vorteile, die durch diesen Aufbau erzielt werden, beziehen sich auf die Kontamination der Membran. Eine Verbesserung der Langzeitstabilität wird in US 5,464,700 nicht dargestellt. Dies ergibt sich auch aus den sehr niedrigen Betriebstemperaturen. In der Beschreibung der in US 5,464,700 dargelegten Erfindung wird darauf hingewiesen, daß die Betriebstemperatur der Zelle auf bis 80 °C beschränkt ist. Elastomere sind auch in der Regel nur für Dauergebrauchstemperaturen bis 100 °C geeignet. Höhere Einsatztemperaturen sind mit Elastomeren nicht zu erreichen. Die hierin beschriebene Technik ist also für Brennstoffzellen mit Betriebstemperaturen über 100 °C nicht geeignet.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser.

Insbesondere bei der Verwendung von sogenannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass die in Brennstoffzellensystemen, die bei Temperaturen über 100°C betrieben werden, die Abwärme deutlich besser nutzbar gemacht und somit die Brennstoffzellensystem-Effizienz gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine ionische Leitfähigkeit zeigen. Die erste erfolgversprechende Entwicklung in diese Richtung ist in der Schrift WO96/13872 dargelegt.

In dieser Schrift wird auch eine erste Methode zur Herstellung von Membran-Elektroden-Einheiten beschrieben. Dabei werden zwei Elektroden auf die Membran gepreßt, die nur jeweils einen Teil der beiden Hauptflächen der Membran abdecken. Auf den verbleibenden freie Teil der Hauptflächen der Membran wird in der Zelle eine PTFE-Dichtung gedrückt, so daß die Gasräume von Anode und Kathode gegeneinander und gegen die Umgebung abgedichtet sind. Jedoch wurde festgestellt, daß eine derart hergestellte Membran-Elektroden-Einheiten nur bei sehr kleinen Zellflächen von 1 cm² eine hohe Haltbarkeit hat. Werden größere Zellen, insbesondere mit einer Fläche von mindestens 10 cm² hergestellt, so ist die Haltbarkeit der Zellen bei Temperaturen von größer 150°C auf weniger als 100 Stunden begrenzt.

Eine weitere Hochtemperatur-Brennstoffzelle wird in der Druckschrift JP-A-2001-196082 offenbart. Hierin wird eine Elektroden-Membran-Einheit dargestellt, die mit einer Polyimid-Dichtung versehen ist. Problematisch an diesem Aufbau ist jedoch, daß zur Abdichtung zwei Membranen notwendig sind, zwischen denen ein Dichtring aus Polyimid vorgesehen ist. Da die Dicke der Membran aus technischen Gründen möglichst gering gewählt werden muß, ist die Dicke des Dichtrings zwischen den beiden in JP-A-2001-196082 beschriebenen Membranen äußerst begrenzt. In Langzeitversuchen wurde festgestellt, daß ein derartiger Aufbau ebenfalls nicht über einen Zeitraum von mehr als 1000 Stunden stabil ist.

Des Weiteren ist aus DE 10235360 eine Membran-Elektroden-Einheit bekannt, die Polyimid-Schichten zur Abdichtung enthält. Allerdings weisen diese Schichten eine einheitliche Dicke auf, sodass der Randbereich dünner ist als der Bereich, der in Kontakt mit der Membran steht.

Die zuvor genannten Membran-Elektroden-Einheiten werden im Allgemeinen mit planaren Bipolarplatten verbunden, in die Kanäle für einen Gasstrom eingefräst sind. Da die Membran- Elektroden-Einheiten teilweise eine größere Dicke aufweisen als die zuvor beschriebenen Dichtungen, wird zwischen der Dichtung der Membran-Elektroden-Einheiten und den Bipolarplatten eine Dichtung eingelegt, die üblicherweise aus PTFE hergestellt wird.

Es wurde nun festgestellt, dass die Lebensdauer der zuvor beschriebenen Brennstoffzellen begrenzt ist.

Aufgabe der vorliegenden Erfindung ist daher, eine verbesserte MEE und die damit betriebenen Brennstoffzellen bereitzustellen, die vorzugsweise die folgenden Eigenschaften aufweisen sollten:
- Die Zellen sollten bei einem Betrieb bei Temperaturen über 100°C eine lange Lebensdauer zeigen.
- Die Einzelzellen sollten eine gleichbleibende oder verbesserte Leistung bei Temperaturen über 100°C über einen langen Zeitraum zeigen.
- Hierbei sollten die Brennstoffzellen nach langer Betriebszeit eine hohe Ruhespannung sowie einen geringen Gasdurchtritt aufweisen (gas cross over).
- Die Brennstoffzellen sollten insbesondere bei Betriebstemperaturen oberhalb von 100°C eingesetzt werden können und ohne zusätzliche Brenngasbefeuchtung auskommen. Insbesondere sollten die Membran-Elektroden-Einheiten permanenten oder wechselnden Druckdifferenzen zwischen Anode und Kathode widerstehen können.
- Des weiteren war es mithin Aufgabe der vorliegenden Erfindung eine Membran-Elektroden-Einheit zur Verfügung zu stellen, die einfach und kostengünstig hergestellt werden kann. Hierbei sollte insbesondere möglichst wenig von teuren Materialien eingesetzt werden.
- Insbesondere sollte die Brennstoffzelle auch nach langer Zeit eine hohe Spannung aufweisen und bei niedriger Stöchiometrie betrieben werden können.
- Insbesondere sollte die MEE robust gegen unterschiedliche Operationsbedingungen (T, p, Geometrie etc.) sein um die allgemeine Zuverlässigkeit zu erhöhen.
- Weiterhin sollte teures Edelmetall, insbesondere Platinmetalle, sehr effektiv ausgenutzt werden.

Gelöst werden diese Aufgaben durch Membran-Elektroden-Einheiten mit allen Merkmalen des Anspruchs 1.

### Polymer-Elektrolyt-Membranen

Für die Zweche des vorliegenden Erfindung geeignete Polymer-Elektrolyt-Membranen sind an sich bekannt.

Die Dicke des inneren Bereichs der Membran nimmt bei einem Druck von 5 N/mm² über einen Zeitraum von 10 Minuten mindestens 5%, bevorzugt mindestens 10% ab und ganz besonders bevorzugt mindestens 50% ab. Diese Eigenschaft kann auf bekannte Weise gesteuert werden. Hierzu gehören insbesondere der Dotierungsgrad einer mit Säure dotierten Membran sowie Additive, die einen Kunststoff weich machen.

Diese Membranen können unter anderem durch Quellen von flächigen Materialen, beispielsweise einer Polymerfolie, mit einer Flüssigkeit, die säurehaltige Verbindungen umfasst, oder durch Herstellung einer Mischung von Polymeren und säurehaltige Verbindungen und anschließendes Bilden einer Membran durch Formen eines flächigen Gegenstandes und anschließender Verfestigung, um eine Membran zu bilden, erzeugt werden.

Zu den hierfür geeigneten Polymeren gehören basische Polymere die mit Phosphor Saure dotiert sind. Als mit Säure dotierte basische Polymermembran kommen nahezu alle bekannten Polymermembranen in Betracht, bei denen die Protonen transportiert werden können. Hierbei sind Säuren bevorzugt, die Protonen ohne zusätzliches Wasser, z.B. mittels des sogenannten Grotthus Mechanismus, befördern können.

Als basisches Polymer im Sinne der vorliegenden Erfindung wird vorzugsweise ein basisches Polymer mit mindestens einem Stickstoffatom in einer Wiederholungseinheit verwendet.

Die Wiederholungseinheit im basischen Polymer enthält gemäß einer bevorzugten Ausführungsform einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Gemäß einem besonderen Aspekt der vorliegenden Erfindung werden hochtemperaturstabile Polymere eingesetzt, die mindestens ein Stickstoff-, Sauerstoff- und/oder Schwefelatom in einer oder in unterschiedlichen Wiederholungseinheiten enthalten.

Hochtemperaturstabil im Sinne der vorliegenden Erfindung ist ein Polymer, welches als Polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden bei mindestens 80°C, vorzugsweise mindestens 120°C, besonders bevorzugt mindestens 160°C betrieben werden kann, ohne dass die Leistung, die gemäß der in WO 01/18894 A2 beschriebenen Methode gemessen werden kann, um mehr als 50%, bezogen auf die Anfangsleistung abnimmt.

Die vorstehend genannten Polymeren können einzeln oder als Mischung (Blend) eingesetzt werden. Hierbei sind insbesondere Blends bevorzugt, die Polyazole und/oder Polysulfone enthalten. Die bevorzugten Blendkomponenten sind dabei Polyethersulfon, Polyetherketon und mit Sulfonsäuregruppen modifizierte Polymere wie in der deutschen Patentanmeldung Nr. 10052242. beschrieben. Durch die Verwendung von Blends können die mechanischen Eigenschaften verbessert und die Materialkosten verringert werden.

Eine besonders bevorzugte Gruppe von basischen Polymeren stellen Polyazole dar. Ein basisches Polymer auf Basis von Polyazol enthält wiederkehrende Azoleinheiten der Allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 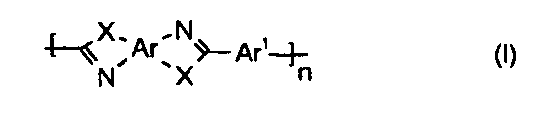 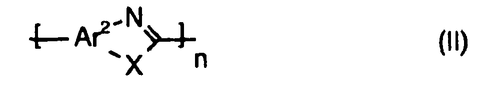 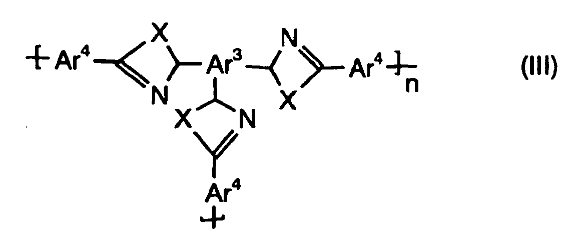 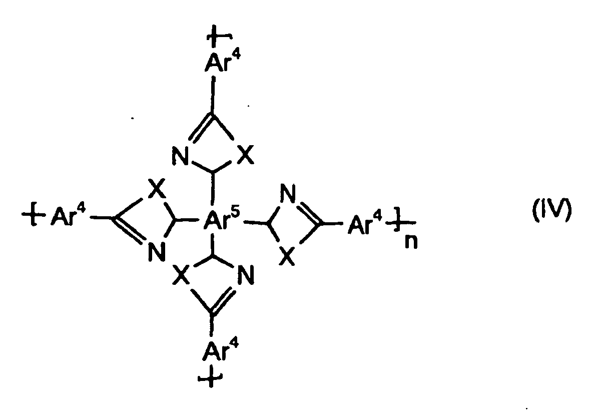 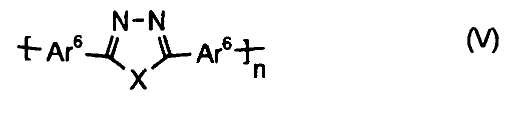 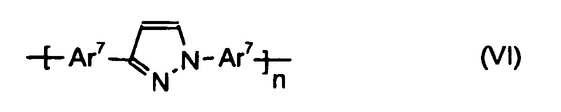 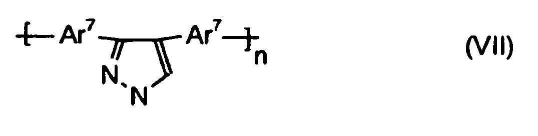 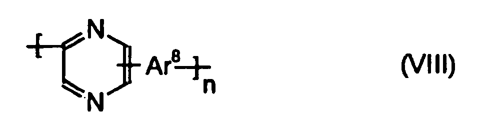 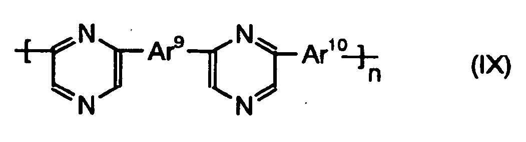 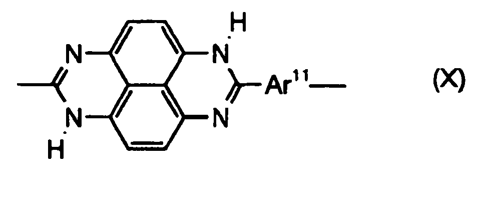 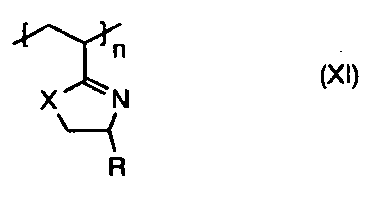 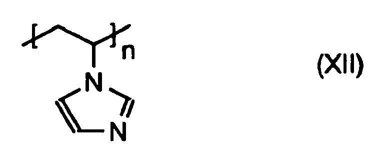 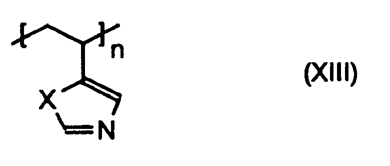 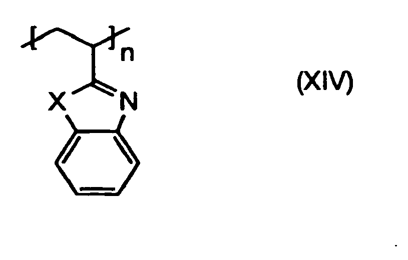 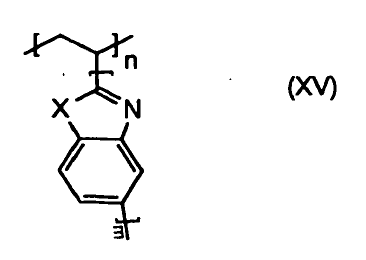 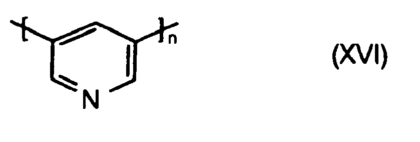 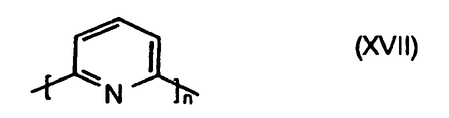 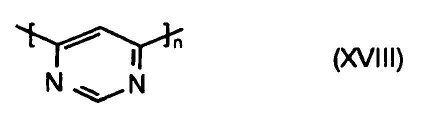 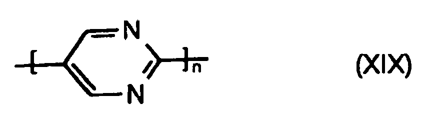 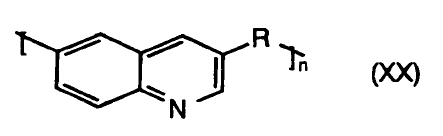 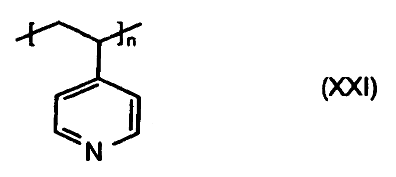 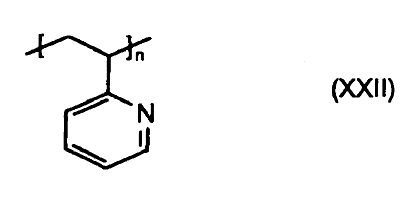 worin
- Ar: gleich oder verschieden sind und für eine vierbindige aromatische oder heteroaromatische Gruppe stehen, die ein- oder mehrkernig sein kann,
- Ar¹: gleich oder verschieden sind und für eine zweibindige aromatische oder heteroaromatische Gruppe stehen, die ein- oder mehrkernig sein kann,
- Ar²: gleich oder verschieden sind und für eine zwei oder dreibindige aromatische oder heteroaromatische Gruppe stehen, die ein- oder mehrkernig sein kann,
- Ar³: gleich oder verschieden sind und für eine dreibindige aromatische oder heteroaromatische Gruppe stehen, die ein- oder mehrkernig sein kann,
- Ar⁴: gleich oder verschieden sind und für eine dreibindige aromatische oder heteroaromatische Gruppe stehen, die ein- oder mehrkernig sein kann,
- Ar⁵: gleich oder verschieden sind und für eine vierbindige aromatische oder heteroaromatische Gruppe stehen, die ein- oder mehrkernig sein kann,
- Ar⁶: gleich oder verschieden sind und für eine zweibindige aromatische oder heteroaromatische Gruppe stehen, die ein- oder mehrkernig sein kann,
- Ar⁷: gleich oder verschieden sind und für eine zweibindige aromatische oder heteroaromatische Gruppe stehen, die ein- oder mehrkernig sein kann,
- Ar⁸: gleich oder verschieden sind und für eine dreibindige aromatische oder heteroaromatische Gruppe stehen, die ein- oder mehrkernig sein kann,
- Ar⁹: gleich oder verschieden sind und für eine zwei- oder drei- oder vierbindige aromatische oder heteroaromatische Gruppe stehen, die ein- oder mehrkernig sein kann,
- Ar¹⁰: gleich oder verschieden sind und für eine zwei- oder dreibindige aromatische oder heteroaromatische Gruppe stehen, die ein- oder mehrkernig sein kann,
- Ar¹¹: gleich oder verschieden sind und für eine zweibindige aromatische oder heteroaromatische Gruppe stehen, die ein- oder mehrkernig sein kann,
- X: gleich oder verschieden ist und für Sauerstoff, Schwefel oder eine Aminogruppe steht, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin,

Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 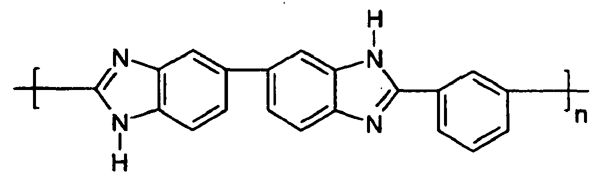 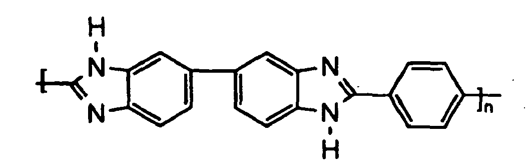 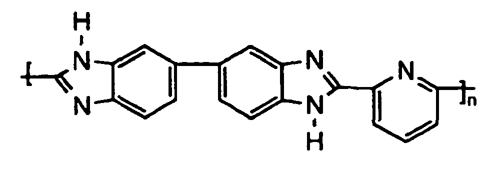 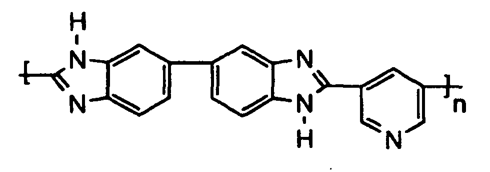 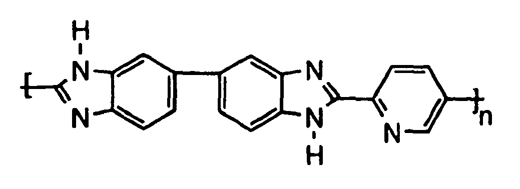 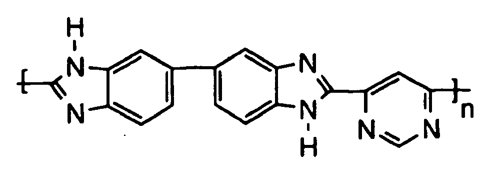 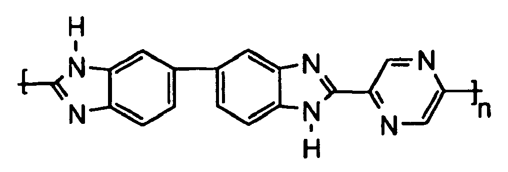 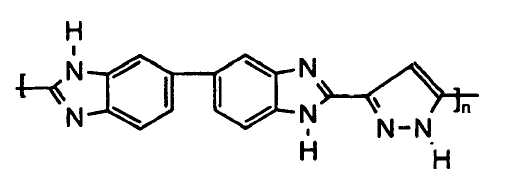 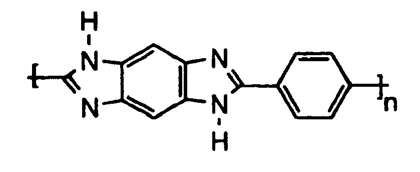 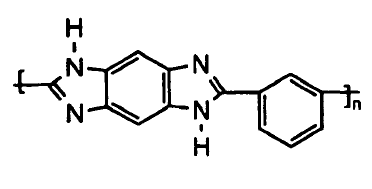 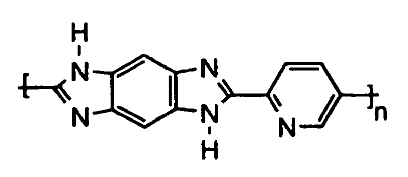 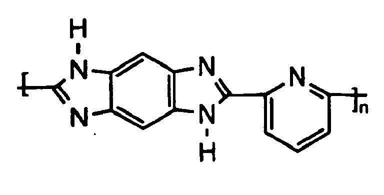 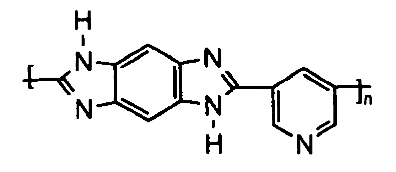 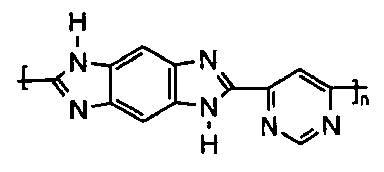 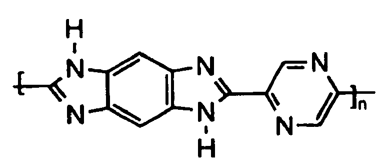 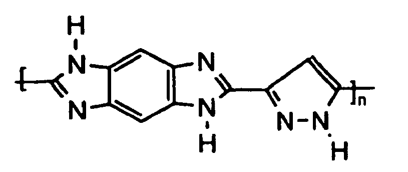 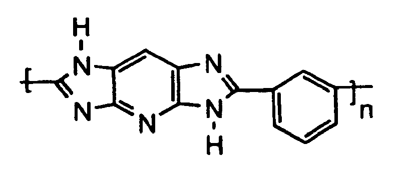 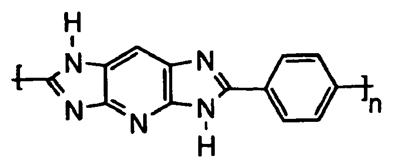 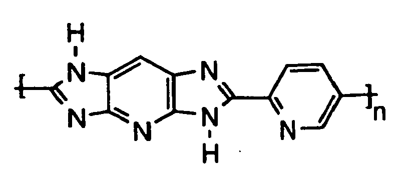 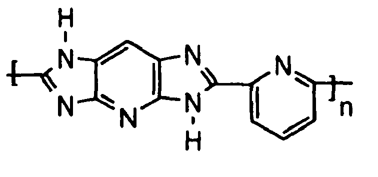 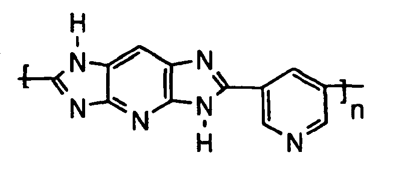 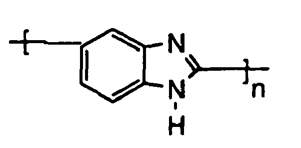 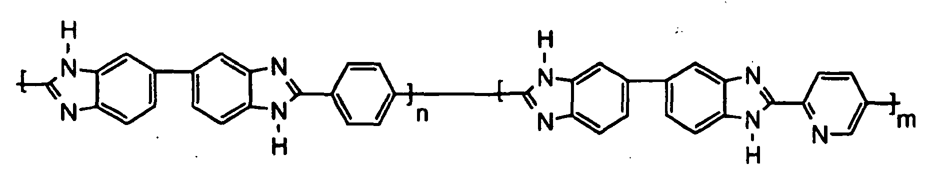 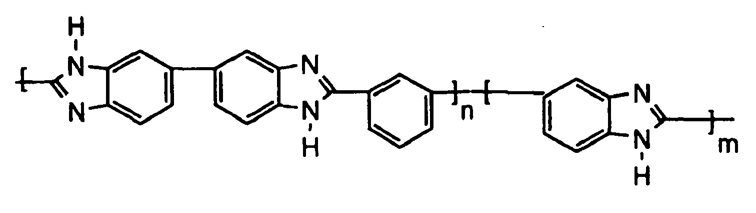 wobei n und m eine ganze Zahl größer gleich 10, vorzugsweise größer gleich 100 ist.

Die eingesetzten Polyazole, insbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,8 bis 10 dl/g, insbesondere 1 bis 10 dl/g.

Die Herstellung derartiger Polyazole ist bekannt, wobei ein oder mehrere aromatische Tetra-Amino-Verbindungen mit ein oder mehreren aromatischen Carbonsäuren bzw. deren Estern, die mindestens zwei Säuregruppen pro Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert.

Zu den bevorzugten aromatischen Carbonsäuren gehören unter anderem Di-carbonsäuren und Tri-carbonsäuren und Tetra-Carbonsäuren bzw. deren Estern oder deren Anhydride oder deren Säurechloride. Der Begriff aromatische Carbonsäuren umfaßt gleichermaßen auch heteroaromatische Carbonsäuren.

Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetraftuoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tri-, tetra-carbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure oder 3,5,4'-Biphenyltricarbonsäure.

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure oder 1,4,5,8-Naphthalintetracarbonsäure.

Bevorzugt handelt es sich bei den eingesetzten heteroaromatischen Carbonsäuren um heteroaromatischen Dicarbonsäuren, Tricarbonsäuren und Tetracarbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure oder Benzimidazol-5,6-dicarbonsäure sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bevorzugt handelt es sich bei den eingesetzten aromatischen und heteroaromatischen Diaminocarbonsäuren um Diaminobenzoesäure oder deren Mono- und Dihydrochloridderivate.

Bevorzugt werden Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Zu den bevorzugten aromatische Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bevorzugte Polybenzimidazole sind unter dem Handelsnamen ®Celazole von Celanese AG kommerziell erhältlich.

Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/10 min, insbesondere kleiner oder gleich 30 cm³/10 min und besonders bevorzugt kleiner oder gleich 20 cm³/10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den Allgemeinen Formeln A, B, C, D, E, F und/oder G aufweisen:

—O—R-SO₂-R— (A)

—O—R-SO₂-R—O—R— (B)

—O—R-SO₂-R—O—R—R— (C)

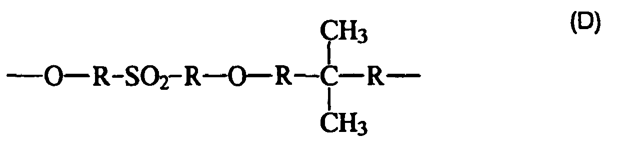

—O—R-SO₂-R—R-SO₂-R— (E)

—O—R-SO₂-R—R-SO₂-R—O—R-SO₂-] (F)

-[-O—R-SO₂-R-]—[SO₂-R—R-]- (G),

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N:

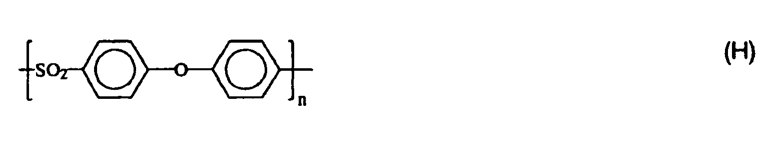

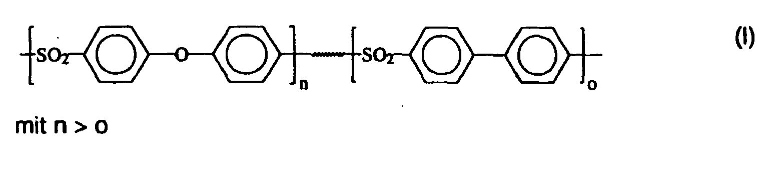

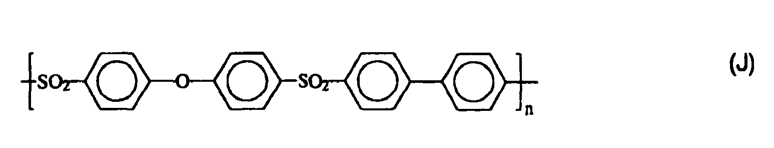

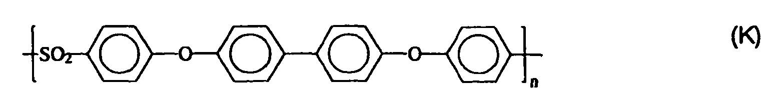

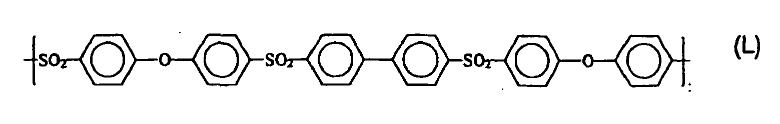

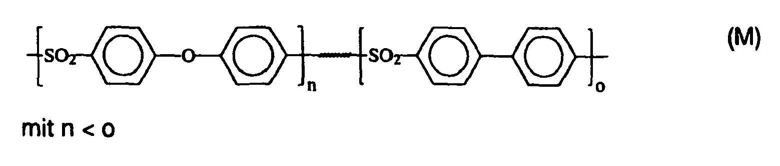

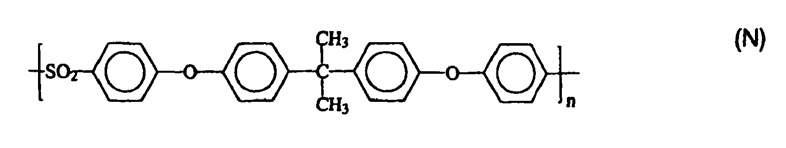

Die zuvor beschriebenen Polysulfone können unter den Handelsnamen ^{®}Victrex 200 P, ^{®}Victrex 720 P, ^{®}Ultrason E, ^{®}Ultrason S, ^{®}Mindel, ^{®}Radel A, ^{®}Radel R, ^{®}Victrex HTA, ^{®}Astrel und ^{®}Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK™, ^{®}Hostatec, ^{®}Kadel kommerziell erhalten werden.

Zur Herstellung von Polymerfolien kann ein Polymer, vorzugsweise ein Polyazol in einem weiteren Schritt in polaren, aprotischen Lösemitteln, wie beispielsweise Dimethylacetamid (DMAc), gelöst und eine Folie mittels klassischer Verfahren erzeugt werden.

Zur Entfernung von Lösemittelresten kann die so erhaltene Folie mit einer Waschflüssigkeit, wie in der deutschen Patentanmeldung Nr. 10109829 beschrieben, behandelt werden. Durch die in der deutschen Patentanmeldung beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Zusätzlich kann der Polymerfilm weitere Modifizierungen, beispielsweise durch Vernetzung, wie in der deutschen Patentanmeldung Nr. 10110752 oder in WO 00/44816 beschrieben, aufweisen. In einer bevorzugten Ausführungsform enthält die eingesetzte Polymerfolie aus einem basischen Polymer und mindestens einer Blendkomponente zusätzlich einem Vernetzer wie in der deutschen Patentanmeldung Nr. 10140147 beschrieben.

Die Dicke der Polyazolfolien kann in weiten Bereichen liegen. Vorzugsweise liegt die Dicke der Polyazolfolie vor einer Dotierung mit Säure im Bereich von 5 µm bis 2000 µm, besonders bevorzugt im Bereich von 10µm bis 1000 µm, ohne daß hierdurch eine Beschränkung erfolgen soll.

Um eine Protonen-Leitfähigkeit zu erzielen, werden diese Folien mit einer Säure dotiert.

Über den Dotierungsgrad kann die Leitfähigkeit der Polyazolfolie beeinflußt werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 50, insbesondere zwischen 5 und 40, bevorzugt.

Dotierungsmittel sind Phosphorsäure, bzw. Verbindungen, die diese Säuren, beispielsweise bei Hydrolyse freisetzen. Hierbei werden im Allgemeinen hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Des weiteren können protonenleitfähige Membranen auch durch ein Verfahren erhalten werden umfassend die Schritte umfassend die Schritte
I) Lösen von Polymeren, insbesondere Polyazolen in Polyphosphorsäure,
II) Erwärmen der Lösung erhältlich gemäß Schritt A) unter Inertgas auf Temperaturen von bis zu 400°C,
III) Bilden einer Membran unter Verwendung der Lösung des Polymeren gemäß Schritt II) auf einem Träger und
IV) Behandlung der in Schritt III) gebildeten Membran bis diese selbsttragend ist.

Des weiteren können dotierte Polyazolfolien durch ein Verfahren erhalten werden umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren .
D) Behandlung der in Schritt C) gebildeten Membran (bis diese selbsttragend ist).

Die in Schritt A) einzusetzenden aromatischen bzw. heteroaromatschen Carbonsäure- und Tetra-Amino-Verbindungen wurden zuvor beschrieben.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden. Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 und 4000 µm, vorzugsweise zwischen 30 und 3500 µm, insbesondere zwischen 50 und 3000 µm.

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei. Behandlung der gemäß Schritt C) erzeugten Polymerschicht in Gegenwart von Feuchtigkeit bei Temperaturen und für eine Dauer ausreichend bis die Schicht eine ausreichende Festigkeit für den Einsatz in Brennstoffzellen besitzt. Die Behandlung kann soweit erfolgen, daß die Membran selbsttragend ist, so daß sie ohne Beschädigung vom Träger abgelöst werden kann.

Gemäß Schritt C) wird das in Schritt B) erhaltene flächige Gebilde auf eine Temperatur von bis zu 350°C, vorzugsweise bis zu 280°C und besonders bevorzugt im Bereich von 200°C bis 250°C erhitzt. Die in Schritt C) einzusetzenden Inertgase sind in der Fachwelt bekannt. Zu diesen gehören insbesondere Stickstoff sowie Edelgase, wie Neon, Argon, Helium.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die Hydrolyseflüssigkeit kann eine Lösung darstellen, wobei die Flüssigkeit auch suspendierte und/oder dispergierte Bestandteile enthalten kann. Die Viskosität der Hydrolyseflüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die Behandlung gemäß Schritt D) kann mit jeder bekannten Methode erfolgen. Beispielsweise kann die in Schritt C) erhaltene Membran in ein Flüssigkeitsbad getaucht werden. Des weiteren kann die Hydrolyseflüssigkeit auf die Membran gesprüht werden. Weiterhin kann die Hydrolyseflüssigkeit über die Membran gegossen werden. Die letzteren Methoden haben den Vorteil, dass die Konzentration an Säure in der Hydrolyseflüssigkeit während der Hydrolyse konstant bleibt. Das erste Verfahren ist jedoch häufig kostengünstiger in der Ausführung.

Zu den Sauerstoffsäuren des Phosphors und/oder Schwefels gehören insbesondere Phosphinsäure, Phosphonsäure, Phosphorsäure, Hypodiphosphonsäure Hypodiphosphorsäure, Oligophosphorsäuren, schwefelige Säure, dischwefelige Säure und/oder Schwefelsäure. Diese Säuren können einzeln oder als Mischung eingesetzt werden.

Des weiteren umfassen die Sauerstoffsäuren des Phosphors und/oder Schwefels radikalisch polymerisierbare Monomere, die Phosphonsäure- und/oder Sulfonsäuregruppen umfassen

Phosphonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Phosphonsäuregruppen umfassende Polymer aus dem Polymerisationsprodukt, das durch Polymerisation des Phosphonsäuregruppen umfassenden Monomers allein oder mit weiteren Monomeren und/oder Vernetzern erhalten wird.

Das Phosphonsäuregruppen umfassende Monomer kann ein, zwei, drei oder mehr Kohlenstoff-Kohlenstoff-Doppelbindungen umfassen. Des weiteren kann das Phosphonsäuregruppen umfassende Monomer ein, zwei, drei oder mehr Phosphonsäuregruppen enthalten.

Im allgemeinen enthält das Phosphonsäuregruppen umfassende Monomer 2 bis 20, vorzugsweise 2 bis 10 Kohlenstoffatome.

Bei dem Phosphonsäuregruppen umfassenden Monomer handelt es sich vorzugsweise um Verbindungen der Formel 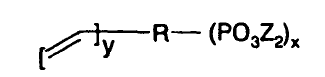 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 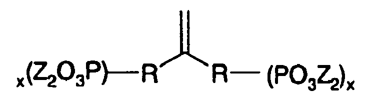 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 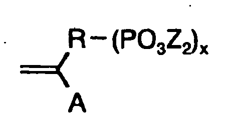 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäureund/oder Methacrylsäure-Verbindungen, die Phosphonsäuregruppen aufweisen., wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Phosphonsäuregruppen umfassenden Monomere können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Die Phosphonsäuregruppen umfassenden Monomere können des weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

Gemäß einem besonderen Aspekt der vorliegenden Erfindung ist das Verhältnis des Gewichts der Summe aus Phosphorsäure, Polyphosphorsäure und der Hydrolyseprodukte der Polyphosphorsäure zum Gewicht der radikalisch polymerisierbaren Monomere, beispielsweise der Phosphonsäuregruppen umfassenden Monomere, vorzugsweise größer oder gleich 1:2, insbesondere größer oder gleich 1:1. und besonders bevorzugt größer oder gleich 2:1.

Vorzugsweise liegt das Verhältnis des Gewichts der Summe aus Phosphorsäure, Polyphosphorsäure und der Hydrolyseprodukte der Polyphosphorsäure zum Gewicht der radikalisch polymerisierbaren Monomere im Bereich von 1000:1 bis 3:1, insbesondere 100:1 bis 5:1 und besonders bevorzugt 50:1 bis 10:1.

Dieses Verhältnis kann leicht durch übliche Verfahren ermittelt werden, wobei die Phosphorsäure, Polyphosphorsäure und deren Hydrolyseprodukte vielfach aus der Membran ausgewaschen werden können. Hierbei kann das Gewicht der Polyphosphorsäure und deren Hydrolyseprodukte nach der vollständigen Hydrolyse zur Phosphorsäure bezogen werden. Dies gilt im allgemeinen ebenfalls für die radikalisch polymerisierbaren Monomere.

Sulfonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Sulfonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Sulfonsäuregruppen umfassende Polymer aus dem Polymerisationsprodukt, das durch Polymerisation des Sulfonsäuregruppen umfassenden Monomers allein oder mit weiteren Monomeren und/oder Vernetzern erhalten wird.

Das Sulfonsäuregruppen umfassende Monomer kann ein, zwei, drei oder mehr Kohlenstoff-Kohlenstoff-Doppelbindungen umfassen. Des weiteren kann das Sulfonsäuregruppen umfassende Monomer ein, zwei, drei oder mehr Sulfonsäuregruppen enthalten..

Im allgemeinen enthält das Sulfonsäuregruppen umfassende Monomer 2 bis 20, vorzugsweise 2 bis 10 Kohlenstoffatome.

Bei dem Sulfonsäuregruppen umfassenden Monomer handelt es sich vorzugsweise um Verbindungen der Formel 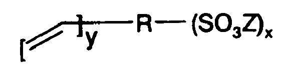 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 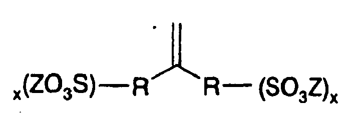 worin
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 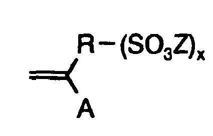 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15- Alkylenoxygruppe, beispielsweise Ethylenoxygruppe oder zweibindige C5- C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15- Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Die Sulfonsäuregruppen umfassenden Monomere können des weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

In einer weiteren Ausführungsform der Erfindung können zur Vernetzung befähigte Monomere eingesetzt werden. Diese Monomere können der Hydrolyseflüssigkeit beigefügt werden. Darüber hinaus können die zur Vernetzung befähigten Monomere auch auf die nach der Hydrolyse erhaltene Membran aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

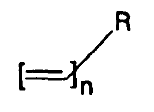

Dimethylacrylate, Trimethylycrylate, Tetramethylacrylate der Formel

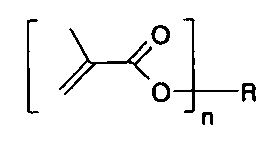

Diacrylate, Triacrylate, Tetraacrylate der Formel 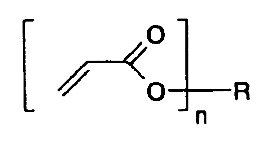 worin R eine C1-C15-Alkylgruppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15- Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.%, vorzugsweise 0,1 bis 20 Gew.%, besonders bevorzugt 1 und 10 Gew.%, bezogen auf das Gewicht der Membran, eingesetzt werden können.

Die vernetzende Monomere können nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

Gemäß einem besonderen Aspekt der vorliegenden Erfindung können die Phosphonsäure- und/oder Sulfonsäuregruppen umfassenden Monomere bzw. die vernetzenden Monomere polymerisiert werden, wobei die Polymerisation vorzugsweise radikalisch erfolgt. Die Radikalbildung kann thermisch, photochemisch, chemisch und/oder elektrochemisch erfolgen.

Beispielsweise kann eine Starterlösung, die mindestens eine zur Bildung von Radikalen befähigte Substanz enthält, der Hydrolyseflüssigkeit beigefügt werden. Des weiteren eine Starterlösung auf die Membran nach der Hydrolyse aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1 -Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des weiteren können auch Radikalbildner eingesetzt werden, die bei Bestrahlung Radikale bilden. Zu den bevorzugten Verbindungen gehören unter anderem Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6-trimethylbenzoyl)-phenylphosphinoxid (®Irgacure 819) und 1-[4-(2-Hydroxyethoxy)phenyl]-2-hydroxy-2-phenytpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf das Gewicht der radikalisch polymerisierbaren Monomere; Phosphonsäure- und/oder Sulfonsäuregruppen umfassenden Monomere bzw. der vernetzenden Monomere) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Amold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,γ und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der Phosphonsäure- und/oder Sulfonsäuregruppen umfassenden Monomere bzw. der vernetzenden Monomere erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung des flächigen Gebildes, wobei diese Verfestigung durch Mikrohärtemessung verfolgt werden kann. Vorzugsweise beträgt die durch die Polymerisation bedingte Zunahme der Härte mindestens 20%, bezogen auf die Härte einer entsprechend hydrolysierten Membran ohne Polymerisation der Monomere.

Gemäß einem besonderen Aspekt der vorliegenden Erfindung ist das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere, vorzugsweise größer oder gleich 1:2, insbesondere größer oder gleich 1:1. und besonders bevorzugt größer oder gleich 2:1.

Vorzugsweise liegt das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere im Bereich von 1000:1 bis 3:1, insbesondere 100:1 bis 5:1 und besonders bevorzugt 50:1 bis 10:1.

Das Molverhältnis kann mit üblichen Methoden bestimmt werden. Hierzu können insbesondere spektroskopiesche Verfahren, beispielsweise die NMR-Spektroskopie eingesetzt werden. Hierbei ist zu bedenken, dass die Phosphonsäuregruppen in der formalen Oxidationsstufe 3 und der Phosphor in Phosphorsäure, Polyphosphorsäure bzw. Hydrolyseprodukte hiervon in der Oxidationsstufe 5 vorliegen.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts Mₙ, das durch GPC-Methoden ermittelt werden kann. Aufgrund der Probleme die in der Membran enthaltenen Phosphonsäuregruppen umfassenden Polymere ohne Abbau zu isolieren, wird dieser Wert anhand einer Probe bestimmt, die durch Polymerisation von Phosphonsäuregruppen umfassenden Monomeren ohne Zusatz von Polymer durchgeführt wird. Hierbei wird der Gewichtsanteil an Phosphonsäuregruppen umfassenden Monomere und an Radikalstarter im Vergleich zu den Verhältnissen der Herstellung der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzten Phosphonsäuregruppen umfassenden Monomere.

Die Hydrolyseflüssigkeit umfasst Wasser, wobei die Konzentration des Wassers im allgemeinen nicht besonders kritisch ist. Gemäß einem besonderen Aspekt der vorliegenden Erfindung umfasst die Hydrolyseflüssigkeit 5 bis 80 Gew.-%, vorzugsweise 8 bis 70 Gew.-% und besonders bevorzugt 10 bis 50 Gew.% Wasser. Die Wassermenge, die in den Sauerstoffsäuren formal enthalten ist, wird bei dem Wassergehalt der Hydrolyseflüssigkeit nicht berücksichtigt.

Von den zuvor genannten Säuren sind Phosphorsäure und/oder Schwefelsäure besonders bevorzugt, wobei diese Säuren insbesondere 5 bis 70 Gew.-%, vorzugsweise 10 bis 60 Gew.% und besonders bevorzugt 15 bis 50 Gew.% Wasser umfassen.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 µm, vorzugsweise zwischen 20 und 2000 µm, insbesondere zwischen 20 und 1500 µm, die selbsttragend ist. Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammer erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der Polymermembran einstellbar. Die Konzentration der Phosphorsäure wird als Mol Säure pro Mol Wiederholungseinheit des Polymers angegeben. Durch das Verfahren umfassend die Schritte A) bis D) können Membranen mit einer besonders hohen Phosphorsäurekonzentration erhalten werden. Bevorzugt ist eine Konzentration (Mol Phosphorsäure bezogen auf eine Wiederholeinheit der Formel (I), beispielsweise Polybenzimidazol) zwischen 10 und 50, insbesondere zwischen 12 und 40. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Gemäß einer Abwandlung des zur beschriebenen Verfahrens, bei dem dotierte Polyazolfolien durch die Verwendung von Polyphosphorsäure hergestellt werden, kann die Herstellung dieser Folien auch durch ein Verfahren erfolgen umfassend die Schritte
1) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
2) Lösen des gemäß Schritt 1) erhaltenen festen Prä-Polymeren in Polyphosphorsäure,
3) Erwärmen der Lösung erhältlich gemäß Schritt 2) unter Inertgas auf Temperaturen von bis zu 300°C, vorzugsweise bis zu 280°C unter Ausbildung des gelösten Polyazol-Polymeren .
4) Bilden einer Membran unter Verwendung der Lösung des Polyazol-Polymeren gemäß Schritt 3) auf einem Träger und
5) Behandlung der in Schritt 4) gebildeten Membran bis diese selbsttragend ist.

Die unter den Punkten 1) bis 5) dargestellten Verfahrensschritten wurden zuvor für die Schritte A) bis D) näher erläutert, wobei hierauf, insbesondere im Hinblick auf bevorzugte Ausführungsformen Bezug genommen wird.

Eine Membran, insbesondere eine Membran auf Basis von Polyazolen, kann durch Einwirken von Hitze in Gegenwart von Luftsauerstoff an der Oberfläche noch vernetzt werden. Diese Härtung der Membranoberfläche verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im Allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Besonders bevorzugte Polymermembranen zeigen eine hohe Leistung. Diese begründet sich insbesondere durch eine verbesserte Protonenleitfähigkeit. Diese beträgt bei Temperaturen von 120°C mindestens 1 mS/cm, vorzugsweise mindestens 2 mS/cm, insbesondere mindestens 5 mS/cm. Diese Werte werden hierbei ohne Befeuchtung erzielt.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und einer Kapazität ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-1 00 Thermoelement geregelt. Nach Erreichen der Temperatur wird die Probe vor dem Start der Messung 10 Minuten auf dieser Temperatur gehalten.

### Gasdiffusionsschicht

Die erfindungsgemäße Membran-Elektroden-Einheit weist zwei Gasdiffusionsschichten auf, die durch die Polymer-Elektrolytmembran getrennt sind. Üblich werden hierfür flächige, elektrisch leitende und säureresistente Gebilde eingesetzt. Zu diesen gehören beispielsweise Graphitfaser-Papiere, Kohlefaser-Papiere, Graphitgewebe und/oder Papiere, die durch Zugabe von Ruß leitfähig gemacht wurden. Durch diese Schichten wird eine feine Verteilung der Gasund/oder Flüssigkeitsströme erzielt.

Diese Schicht weist im Allgemeinen eine Dicke im Bereich von 80µm bis 2000µm, insbesondere 100µm bis 1000µm und besonders bevorzugt 150µm bis 500µm auf.

Gemäß einer besonderen Ausführungsform kann mindestens eine der Gasdiffusionsschichten aus einem kompressiblen Material bestehen. Im Rahmen der vorliegenden Erfindung ist ein kompressibles Material durch die Eigenschaft gekennzeichnet, daß die Gasdiffusionsschicht ohne Verlust ihrer Integrität durch Druck auf die Hälfte, insbesondere auf ein Drittel ihrer ursprünglichen Dicke gepreßt werden kann.

Diese Eigenschaft weisen im Allgemeinen Gasdiffusionsschicht aus Graphitgewebe und/oder Papier, das durch Zugabe von Ruß leitfähig gemacht wurde, auf.

### Katalysatorschicht

Die Katalysatorschicht oder Katalysatorschichten enthält oder enthalten katalytisch aktive Substanzen. Zu diesen gehören unter anderem Edelmetalle der Platingruppe, d.h. Pt, Pd, Ir, Rh, Os, Ru, oder auch die Edelmetalle Au und Ag. Desweiteren können auch Legierungen aller vorgenannten Metalle eingesetzt werden. Weiterhin kann mindestens eine Katalysatorschicht Legierungen der Platingruppenelemente mit unedlen Metallen wie zum Beispiel Fe, Co, Ni, Cr, Mn, Zr, Ti, Ga, V usw. enthalten. Darüberhinaus können auch die Oxide der vorgenannten Edelmetalle und/oder Nicht-Edelmetalle eingesetzt werden.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 1000 nm, insbesondere 30 bis 100 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte dar und können über Transmissionselektronenmikroskopie oder Pulver-Röntgendiftraktometrie bestimmt werden.

Die zuvor dargelegten katalytisch aktiven Partikel können im allgemeinen kommerziell erhalten werden.

Des weiteren kann die katalytisch aktive Schicht übliche Additive enthalten. Hierzu gehören unter anderem Fluorpolymere wie z.B. Polytetrafluorethylen (PTFE), protonenleitende lonomere und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm², vorzugsweise 0,3 bis 6,0 mg/cm² und besonders bevorzugt 0,3 bis 3,0 mg/cm². Diese Werte können durch Elementaranalyse einer flächigen Probe bestimmt werden.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

Die elektrochemisch aktive Fläche der Katalysatorschicht bezeichnet die Fläche, die mit der Polymer-Elektrolyt-Membran in Kontakt steht und an der die zuvor dargelegten Redoxreaktionen stattfinden können. Die vorliegende Erfindung ermöglicht die Bildung von besonders großen elektrochemisch aktiven Flächen. Gemäß einem besonderen Aspekt der vorliegenden Erfindung beträgt die Größe dieser elektrochemisch aktiven Fläche mindestens 2 cm², insbesondere mindestens 5 cm² und bevorzugt mindestens 10 cm², ohne daß hierdurch eine Beschränkung erfolgen soll. Der Begriff Elektrode bedeutet, daß das Material eine Elektronenleitfähigkeit aufweist, wobei die Elektrode den elektrochemisch aktiven Bereich bezeichnet.

### Abstandshalter

Die Membran weist im Allgemeinen eine relativ geringe Druckstabilität auf. Um eine Beschädigung des Membran während des Betriebs der Brennstoffzelle zu vermeiden, müssen Vorkehrungen getroffen werden, die ein Zusammenpressen verhindern. Beispielsweise können die Separatorplatten entsprechend geformt werden.

Vorzugsweise wird ein Abstandshalter eingesetzt. Der Abstandshalter kann insbesondere einen Rahmen bilden, wobei die innere, ausgesparte Fläche des Rahmens vorzugsweise der Fläche der Membran-Elektroden-Einheit entspricht. Der Abstandshalter ist vorzugsweise aus einem druckstabilen Material. Bevorzugt nimmt die Dicke des Abstandshalters bei einer Temperatur von 80°C und einem Druck von 5 N/mm² über einen Zeitraum von 5 Stunden höchstens um 5% ab, wobei diese Abnahme der Dicke nach einem ersten Verpressen bestimmt wird, welches bei einem Druck von 5 N/mm² über eine Zeit von 1 Minute erfolgt.

Die Dicke des Abstandshalters beträgt vorzugsweise 50 bis 100 %, insbesondere 65% bis 95% und besonders bevorzugt 75% bis 85%, bezogen auf die Dicke aller Komponenten des inneren Bereichs der Membran-Elektroden-Einheit.

Diese Eigenschaft des Abstandshalters, insbesondere des Rahmens wird im Allgemeinen durch die Verwendung von Polymeren erzielt, die eine hohe Druckstabilität aufweisen. Vielfach weist mindestens ein Abstandshalter einen mehrschichtigen Aufbau auf.

Vorzugsweise nimmt die Dicke des Abstandshalters bei einer Temperatur von 120°C, besonders bevorzugt 160°C und einem Druck von 10 N/mm², insbesondere 15 N/mm² und besonders bevorzugt 20 N/mm² über einen Zeitraum von 5 Stunden, besonders bevorzugt 10 Stunden höchstens um 2%, bevorzugt höchstens um 1 % ab.

Die Polymer-Elektrolyt-Membran weist einen inneren Bereich, der in Kontakt mit einer Katalysatorschicht steht, und einen äußeren Bereich, der nicht auf der Oberfläche einer Gasdiffusionsschicht vorgesehen ist, aufweist. Vorgesehen bedeutet in diesem Zusammenhang, dass der innere Bereich keinen überlappenden Bereich mit einer Gasdiffusionsschicht aufweist, falls eine Betrachtung senkrecht zur Oberfläche einer Gasdiffusionsschicht bzw. des äußeren Bereichs der Polymer-Elektrolyt-Membran vorgenommen wird, sodass erst nach dem Kontaktieren der Polymer-Elektrolyt-Membran mit der Gasdiffusionsschicht eine Zuordnung getroffen werden kann.

Die Dicke des äußeren Bereichs der Membran ist größer als die Dicke des inneren Bereichs. Vorzugsweise ist der äußere Bereich der Membran mindestens 5 µm, besonders bevorzugt mindestens 20µm und ganz besonders bevorzugt mindestens 100µm dicker als der innere Bereich der Membran.

Gemäß einem bevorzugten Aspekt der vorliegenden Erfindung können die vier Kantenflächen der zwei Gasdiffusionsschichten mit der Polymer-Elektrolyt-Membran in Kontakt stehen. Dementsprechend ist die Verwendung einer weiteren Dichtung oder Schicht nicht notwendig. Die Kantenflächen der Gasdiffusionsschicht werden durch die Dicke der Gasdiffusionsschicht sowie der Länge oder Breite gebildet. Die Dicke ist hierbei die kleinste Längenausdehnung des Körpers.

Der äußere Bereich der Polymer-Elektrolyt-Membran kann einen einschichtigen Aufbau aufweisen. In diesem Fall besteht der äußere Bereich der Polymer-Elektrolyt-Membran im Allgemeinen aus dem gleichen Material wie der innere Bereich der Polymer-Elektrolyt-Membran.

Des Weiteren kann der äußere Bereich der Polymer-Elektrolyt-Membran insbesondere mindestens eine weitere Schicht, vorzugsweise mindestens zwei weitere Schichten aufweisen. In diesem Fall weist der äußere Bereich der Polymer-Elektrolyt-Membran mindestens zwei bzw. mindestens drei Komponenten auf.

Gemäß einem bevorzugten Aspekt der vorliegenden Erfindung umfasst der Abstandshalter mindestens eine Polymerschicht, vorzugsweise zwei Polymerschichten mit einer Dicke größer oder gleich 10 µm, wobei die Polymere dieser Schichten jeweils eine Spannung von mindestens 6 N/mm², vorzugsweise mindestens 7 N/mm² aufweisen, gemessen bei 80°C, vorzugsweise bei 160°C und einer Dehnung von 100%. Die Messung dieser Werte erfolgt gemäß DIN EN ISO 527-1.

Die Polymerschichten können sich über den Abstandshalter hinaus erstrecken. Hierbei können diese Polymerschichten auch mit dem äußeren Bereich der Membran in Kontakt stehen. Dementsprechend können die zuvor beschriebenen weiteren Schichten des äußeren Bereichs der Membran und die weiteren Schichten des Abstandhalters eine gemeinsame Schicht bilden.

Gemäß einem besonderen Aspekt der vorliegenden Erfindung kann eine Schicht durch thermoplastische Verfahren, beispielsweise Spritzguss oder Extrusion aufgebracht werden. Dementsprechend ist vorzugsweise eine Schicht aus einem schmelzbaren Polymer hergestellt.

Im Rahmen der vorliegenden Erfindung bevorzugt verwendete Polymere zeigen vorzugsweise eine Dauergebrauchstemperatur von mindestens 190°C, bevorzugt mindestens 220°C und besonders bevorzugt mindestens 250°C gemessen nach MIL-P-461128, Paragraph 4.4.5.

Zu den bevorzugten schmelzbaren Polymeren gehören insbesondere Fluorpolymere, wie beispielsweise Poly(tetrafluorethylen-co-hexafluorpropylen) FEP, Polyvinylidenfluorid PVDF, Perfluoralkoxypolymer PFA, Poly(tetrafluorethylen-coperfluoro(methylvinylether)) MFA. Diese Polymere sind vielfach kommerziell beispielsweise unter den Handelsbezeichnungen Hostafon®, Hyflon®, Teflon®, Dyneon® und Nowoflon® erhältlich.

Eine oder beide Schichten können unter anderem aus Polyphenylene, Phenolharze, Phenoxy-Harze, Polysulfidether, Polyphenylensulfid, Polyethersulfone, Polyimine, Polyetherimine, Polyazole, Polybenzimidazole, Polybenzoxazole, Polybenzthiazole, Polybenzoxadiazole, Polybenztriazole, Polyphosphazene, Polyetherketone, Polyketone, Polyetheretherketone, Polyetherketonketone, Polyphenylenamide, Polyphenyleneoxide und Mischungen von zwei oder mehr dieser Polymere hergestellt werden.

Gemäß einem bevorzugten Aspekt der vorliegenden Erfindung weist der Abstandshalter eine Polyimid-Schicht auf. Polyimide sind in der Fachwelt bekannt. Diese Polymere weisen Imid-Gruppen als wesentliche Struktureinheiten der Hauptkette auf und sind beispielsweise in Ullmann's Encyclopedia of Industrial Chemistry 5th Ed. on CD-ROM, 1998, Keyword Polyimides beschrieben.

Zu den Polyimiden gehören auch Polymere, die neben Imid- auch Amid-(Polyamidimide), Ester- (Polyesterimide) u. Ether-Gruppen (Polyetherimide) als Bestandteile der Hauptkette enthalten.

Bevorzugte Polyimide weisen wiederkehrende Einheiten der Formel (VI) auf, 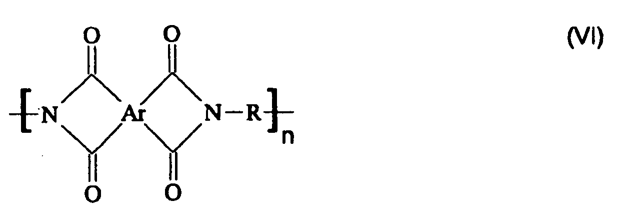 worin der Rest Ar die zuvor genannte Bedeutung hat und der Rest R eine Alkylgruppe oder eine zweibindige aromatische oder heteroaromatische Gruppe mit 1 bis 40 Kohlenstoffatome darstellt. Bevorzugt stellt der Rest R eine zweibindige aromatische oder heteroaromatische Gruppe dar, die sich von Benzol, Naphthalin, Biphenyl, Diphenylether, Diphenylketon, Diphenylmethan, Diphenyldimethylmethan, Bisphenon, Diphenylsulfon, Chinolin, Pyridin, Bipyridin, Anthracen, Thiadiazol und Phenanthren, die gegebenenfalls auch substituiert sein können, ableiten. Der Index n deutet an, daß die wiederkehrenden Einheiten Teil von Polymeren darstellen.

Derartige Polyimide sind kommerziell unter den Handelsnamen ®Kapton, ®Vespel, ®Toray und ®Pyralin von DuPont sowie ®Ultem von GE Plastics und ®Upilex von Ube Industries erhältlich.

Die Dicke der Polyimid-Schicht liegt vorzugsweise im Bereich von 5 µm bis 1000 µm, insbesondere 10 µm bis 500 µm und besonders bevorzugt 25 µm bis 100 µm.

Die verschiedenen Schichten können unter Verwendung von geeigneten Polymeren miteinander verbunden werden. Zu diesen gehören insbesondere Fluorpolymere. Geeignete Fluorpolymere sind in der Fachwelt bekannt. Hierzu gehören unter anderem Polyfluortetraethylen (PTFE) und Poly(tetrafluorethylen-cohexafluorpropylen) (FEP). Die sich auf den zuvor beschriebenen Schichten befindliche Schicht aus aus Fluorpolymeren weist im Allgemeinen eine Dicke von mindestens 0,5 µm, insbesondere von mindestens 2,5 µm auf. Diese Schicht kann zwischen der Polymer-Elektrolyt-Membran und der Polyimid-Schicht vorgesehen sein. Des weiteren kann die Schicht auch auf der von der Polymer-Elektrolyt-Membran abgewandten Seite aufgebracht sein. Darüber hinaus können beide Oberflächen der Polyimid-Schicht mit einer Schicht aus Fluorpolymeren versehen sein. Hierdurch kann überraschend die Langzeitstabilität der MEEs verbessert werden.

Mit Fluorpolymeren versehene Polyimid-Folien, die erfindungsgemäß verwendet werden können, sind kommerziell unter dem Handelsnamen ®Kapton FN von DuPont erhältlich.

Mindestens ein Rahmen steht üblich mit elektrisch leitenden Separatorplatten in Kontakt, die typisch mit Strömungsfeldrinnen auf den den Gasdiffusionsschichten zugewandten Seiten versehen sind, um die Verteilung von Reaktantenfluiden zu ermöglichen. Die Separatorplatten werden üblich aus Graphit oder aus leitfähigem, wärmebeständigem Kunststoff gefertigt.

Die Dicke aller Komponenten des äußeren Bereichs der Polymer-Elektrolyt-Membran ist größer als die Dicke des inneren Bereichs der Polymer-Elektrolyt-Membran. Die Dicke des äußeren Bereichs bezieht sich auf die Summe der Dicken aller Komponenten des äußeren Bereichs. Die Komponenten des äußeren Bereichs ergeben sich aus dem Vektor parallel zur Fläche des äußeren Bereichs der Polymer-Elektrolyt-Membran, wobei die Schichten, die dieser Vektor schneidet zu den Komponenten des äußeren Bereichs zu zählen sind.

Der äußere Bereich hat eine Dicke im Bereich von 120µm bis 2000µm und besonders bevorzugt im Bereich von 150µm bis 800µm auf.

Die Dicke aller Komponenten des äußeren Bereichs kann beispielsweise 50% bis 100 %, vorzugsweise 65% bis 95% und besonders bevorzugt 75% bis 85% bezogen auf die Summe der Dicke aller Komponenten des inneren Bereichs betragen. Die Dicke der Komponenten des äußeren Bereichs bezieht sich hierbei auf die Dicke, die diese Komponenten nach einem ersten Verpressen aufweisen, welches bei einem Druck von 5 N/mm², bevorzugt 10 N/mm² über eine Zeit von 1 Minute erfolgt. Die Dicke der Komponenten des inneren Bereichs beziehen sich auf die Dicken der eingesetzten Schichten, ohne dass hierbei ein Verpressen erfolgen muss.

Die Dicke aller Komponenten des inneren Bereichs ergibt sich im Allgemeinen aus der Summe der Dicken der Membran, der Katalysatorschichten und der Gasdiffusionsschichten von Anode und Kathode.

Die Dicke der Schichten wird mit einem digitalen Dickenmessgerät der Fa. Mitutoyo bestimmt. Der Anpressdruck der zwei kreisförmigen ebenen Kontaktflächen während der Messung beträgt 1 PSI, der Durchmesser der Kontaktfläche beträgt 1 cm.

Die Katalysatorschicht ist im Allgemeinen nicht selbsttragend sondern wird üblich auf die Gasdiffusionsschicht und/oder die Membran aufgebracht. Hierbei kann ein Teil der Katalysatorschicht beispielsweise in die Gasdiffusionsschicht und/oder die Membran diffundieren, wodurch sich Übergangsschichten bilden. Dies kann auch dazuführen, dass die Katalysatorschicht als Teil der Gasdiffusionsschicht aufgefasst werden kann. Die Dicke der Katalysatorschicht ergibt sich aus der Messung der Dicke der Schicht, auf die die Katalysatorschicht aufgebracht wurde, beispielsweise die Gasdiffusionsschicht oder die Membran, wobei diese Messung die Summe der Katalysatorschicht und der entsprechenden Schicht ergibt, beispielsweise die Summe aus Gasdiffusionsschicht und Katalysatorschicht.

Die Messung der druck- und temperaturabhängigen Verformung parallel zum Flächenvektor der Komponenten des äußeren Bereichs, insbesondere des Abstandhalters erfolgt durch eine Hydraulikpresse mit beheizbaren Pressplatten. Die Messung der Dicke sowie die Änderung der Dicke unter Druckbelastung des inneren Bereichs der Membran erfolgt ebenfalls durch eine Hydraulikpresse mit beheizbaren Pressplatten. Hierbei kann das Material über die Kantenflächen der Druckbelastung ausweichen.

Die Hydraulikpresse weist hierbei die folgenden technischen Daten auf:
Die Presse hat einen Kraftbereich von 50-50000 N bei einer maximalen Pressfläche von 220 x 220 mm². Die Auflösung des Drucksensors beträgt ±1 N.
An den Pressplatten ist ein induktiver Wegsensor mit einem Messbereich von 10 mm angebracht. Die Auflösung des Wegsensors beträgt ±1 µm.
Die Pressplatten können in einem Temperaturbereich von RT - 200°C betrieben werden.
Die Presse wird mittels eines PCs mit entsprechender Software im kraft-geregelten Modus betrieben.
Die Daten des Kraft- und des Wegsensors werden in Echtzeit mit einer Datenrate von bis zu 100 Messdaten/Sekunde aufgezeichnet und dargestellt.

### Versuchsdurchführung:

Das zu prüfende Material wird auf eine Fläche von 55 × 55 mm² geschnitten und zwischen die auf 80°, 120°C bzw. 160°C vorgeheizten Pressplatten gelegt.

Die Pressplatten werden geschlossen und eine Anfangskraft von 120N aufgebracht, so dass der Regelkreis der Presse geschlossen wird. Der Wegsensor wird an dieser Stelle auf 0 gesetzt. Anschließend wird eine vorher programmierte Druckrampe abgefahren. Der Druck wird dazu mit einer Geschwindigkeit von 2 N/mm²s auf einen vorgegebenen Wert, beispielsweise 5, 10, 15 oder 20 N/mm² erhöht und bei diesem Wert für mindestens 5 Stunden gehalten. Nach Erreichen der Gesamt-Haltezeit wird der Druck mit einer Rampe von 2 N/mm²s auf 0 N/mm² zurückgefahren und die Presse geöffnet.

Die relative und/oder absolute Dickenänderung kann aus einer während der Druckprüfung aufgezeichneten Verformungskurve abgelesen werden oder im Anschluss an die Druckprüfung durch eine Messung mittels Standard-Dickenmessgerät gemessen werden.

Mindestens eine Komponente des äußeren Bereichs der Polymer-Elektrolyt-Membran steht üblich mit elektrisch leitenden Separatorplatten in Kontakt, die typisch mit Strömungsfeldrinnen auf den den Gasdiffusionsschichten zugewandten Seiten versehen sind, um die Verteilung von Reaktantenfluiden zu ermöglichen. Die Separatorplatten werden üblich aus Graphit oder aus leitfähigem, wärmebeständigem Kunststoff gefertigt.

Im Zusammenspiel mit den Separatorplatten dichten die Komponenten des äußeren Bereichs die Gasräume im Allgemeinen nach außen ab. Darüber hinaus dichten die Komponenten des äußeren Bereichs im Zusammenspiel mit dem inneren Bereich der Polymer-Elektrolyt-Membran im Allgemeinen auch die Gasräume zwischen Anode und Kathode ab. Überraschend wurde somit gefunden, dass ein verbessertes Dichtungskonzept zu einer Brennstoffzelle mit einer verlängerten Lebensdauer führen kann.

Die folgenden Figuren beschreiben verschiedene Ausführungsformen der vorliegenden Erfindung, wobei diese Figuren das Verständnis der vorliegenden Erfindung vertiefen sollen, ohne dass hierdurch eine Beschränkung erfolgen soll.

Es zeigen
- Figur 1: einen schematischen Querschnitt einer erfindungsgemäßen Membran- Elektroden-Einheit, wobei die Katalysatorschicht auf die Gasdiffusionsschicht aufgebracht wurde,
- Figur 2: einen schematischen Querschnitt einer zweiten erfindungsgemäßen Membran-Elektroden-Einheit, wobei die Katalysatorschicht auf die Gasdiffusionsschicht aufgebracht wurde.

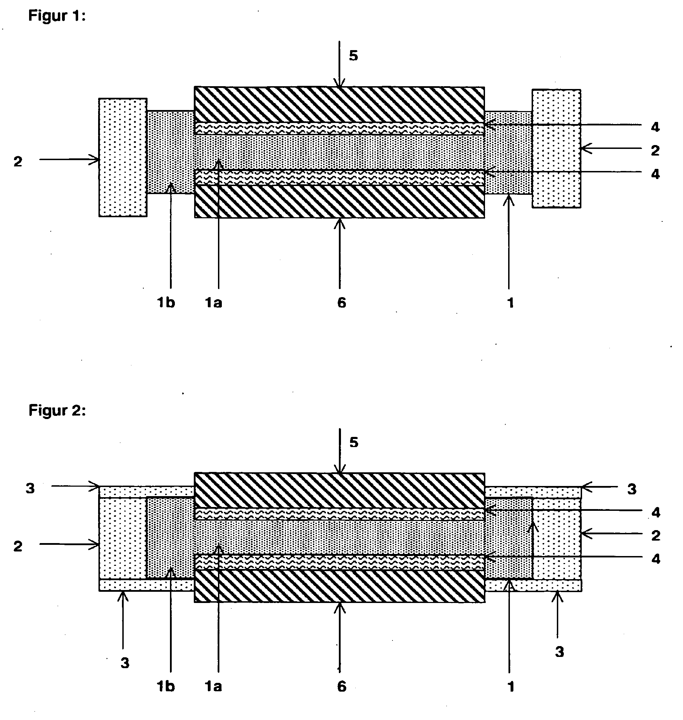

Figur 1 zeigt eine Seitenansicht einer Membran-Elektroden-Einheit gemäß der Erfindung in geschnittener Darstellung. Es handelt sich um ein Schema, wobei die Darstellung den Zustand vor dem Verpressen beschreibt und die Abstände zwischen den Schichten das Verständnis verbessern sollen. Hierbei weist die Polymer-Elektrolyt-Membran 1 einen inneren Bereich 1a und einen äußeren Bereich 1 b auf. Der innere Bereich des Polymer-Elektrolyt-Membran steht in Kontakt mit den Katalysatorschichten 4 und 4a. Auf beiden Seiten der Oberfläche des inneren Bereichs der Polymer-Elektrolyt-Membran 1 ist jeweils eine Gasdiffusionsschicht 5, 6 vorgesehen, die eine Katalysatorschicht 4 bzw. 4a aufweist. Hierbei bildet eine mit einer Katalysatorschicht 4 versehene Gasdiffusionsschicht 5 die Anode bzw. Kathode, wohingegen die zweite mit einer Katalysatorschicht 4a versehene Gasdiffusionsschicht 6 die Kathode bzw. Anode bildet. Die Membran-Elektroden-Einheit wird von einem Abstandshalter 2 umgeben. Die Dicke des äußeren Bereichs 1b bzw. des Abstandshalters 2 liegt vorzugsweise im Bereich von 50 bis 100%, insbesondere 65 bis 95% und besonders bevorzugt 75 bis 85% der Dicke der Schichten 1a+4+4a+5+6.

Figur 2 zeigt eine Seitenansicht einer Membran-Elektroden-Einheit gemäß der Erfindung in geschnittener Darstellung. Es handelt sich um ein Schema, wobei die Darstellung den Zustand vor dem Verpressen beschreibt und die Abstände zwischen den Schichten das Verständnis verbessern sollen. Hierbei weist die Polymer-Elektrolyt-Membran 1 einen inneren Bereich 1a und einen äußeren Bereich 1b auf.

Der innere Bereich des Polymer-Elektrolyt-Membran steht in Kontakt mit den Katalysatorschichten 4 und 4a. Auf beiden Seiten der Oberfläche des inneren Bereichs der Polymer-Elektrolyt-Membran 1 ist jeweils eine Gasdiffusionsschicht 5, 6 vorgesehen, die eine Katalysatorschicht 4 bzw. 4a aufweist. Hierbei bildet eine mit einer Katalysatorschicht 4 versehene Gasdiffusionsschicht 5 die Anode bzw. Kathode, wohingegen die zweite mit einer Katalysatorschicht 4a versehene Gasdiffusionsschicht 6 die Kathode bzw. Anode bildet. Die Membran-Elektroden-Einheit wird von einem Abstandshalter 2 umgeben. Der Abstandshalter und der äußere Bereich der Membran werden durch eine weitere Schicht 3 miteinander verbunden. Die Dicke des äußeren Bereichs 1 b und der weiteren Schicht 3 bzw. des Abstandshalters 2 und der weiteren Schicht 3 liegt vorzugsweise im Bereich von 50 bis 100%, insbesondere 65 bis 95% und besonders bevorzugt 75 bis 85% der Dicke der Schichten 1 a+4+4a+5+6.

Die Herstellung von erfindungsgemäßen Membran-Elektroden-Einheit ist dem Fachmann offensichtlich. Im Allgemeinen werden die verschiedenen Bestandteile der Membran-Elektroden-Einheit übereinandergelegt und durch Druck und Temperatur miteinander verbunden. Im Allgemeinen wird bei einer Temperatur im Bereich von 10 bis 300°C, insbesondere 20°C bis 200° und mit einem Druck im Bereich von 1 bis 1000 bar, insbesondere von 3 bis 300 bar laminiert. Hierbei wird üblich eine Vorkehrung getroffen, die eine Beschädigung der Membran im inneren Bereich verhindert. Beispielsweise kann hierfür ein shimm, d.h. ein Abstandsstück eingesetzt werden.

Gemäß einem besonderen Aspekt der vorliegenden Erfindung kann hierbei die Herstellung der MEAs vorzugsweise kontinuierlich erfolgen. Hierbei begünstigt der einfache Aufbau des System eine Herstellung in besonders wenigen Schritten, da die in der Größe passenden Elektroden, d.h., die mit Katalysatorschichten versehenen Gasdiffusionsschichten, einfach beidseitig in die Membran gepresst werden können. Beispielsweise kann das für die Membran vorgesehene Material von einer Rolle abgezogen werden. Auf dieses Teilstück des Materials werden beidseitig Elektroden aufgebracht und verpresst, wobei eine Beschädigung der Membran beispielsweise durch Abstandsstücke verhindert werden kann. Nach dem Verpressen kann das Teilstück abgeschnitten und weiterverarbeitet oder verpackt werden. Die hierfür notwendigen Schritte können besonders einfach maschinell erfolgen, wobei dies kontinuierlich und vollautomatisch durchgeführt werden kann. Der Abstandshalter erlaubt im Vergleich zu herkömmlichen Dichtsystemen eine einfache Produktion der Brennstoffzellen, da die verpressten MEAs einfach in einen entsprechenden Rahmen aus Abstandshaltermaterial eingebracht werden müssen. Die so erhaltene Kombination kann anschließend zu eine Brennstoffzelle weiterverarbeitet werden. Die mit hohem Aufwand üblich verwendeten Dichtsysteme, die nur in vielen Arbeitsschritten erhalten werden, können somit entfallen.

Die fertige Membran-Elektroden-Einheit (MEE) ist nach dem Abkühlen betriebsbereit und kann in einer Brennstoffzelle verwendet werden.

Besonders überraschend wurde festgestellt, daß erfindungsgemäße Membran-Elektroden-Einheiten aufgrund ihrer Dimensionstabilität bei schwankenden Umgebungstemperaturen und Luftfeuchtigkeit problemlos gelagert oder versendet werden können. Auch nach längerer Lagerung oder nach Versand an Orte mit deutlich unterschiedlichen klimatischen Bedingungen stimmen die Dimensionen der MEE problemlos für den Einbau in Brennstoffzellenstacks. Die MEE muß für einen externen Einbau dann vor Ort nicht mehr konditioniert werden, was die Herstellung der Brennstoffzelle vereinfacht und Zeit und Kosten spart.

Ein Vorteil bevorzugter MEEs ist, daß sie den Betrieb der Brennstoffzelle bei Temperaturen oberhalb 120 °C ermöglichen. Dies gilt für gasförmige und flüssige Brennstoffe, wie z.B. Wasserstoff enthaltende Gase, die z.B. in einem vorgeschalteten Reformierungsschritt aus Kohlenwasserstoffen hergestellt werden. Als Oxidanz kann dabei z.B. Sauerstoff oder Luft verwendet werden.

Ein weiterer Vorteil bevorzugter MEEs ist, daß sie beim Betrieb oberhalb 120 °C auch mit reinen Platinkatalysatoren, d.h. ohne einen weiteren Legierungsbestandteil, eine hohe Toleranz gegen Kohlenmonoxid aufweisen. Bei Temperaturen von 160 °C kann z.B. mehr als 1 % CO im Brenngas enthalten sein, ohne daß dies zu einer merklichen Reduktion der Leistung der Brennstoffzelle führt.

Bevorzugte MEEs können in Brennstoffzellen betrieben werden, ohne daß die Brenngase und die Oxidanzen trotz der möglichen hohen Betriebstemperaturen nicht befeuchtet werden müssen. Die Brennstoffzelle arbeitet dennoch stabil und die Membran verliert ihre Leitfähigkeit nicht. Dies vereinfacht das gesamte Brennstoffzellensystem und bringt zusätzliche Kostenersparnisse, da die Führung des Wasserkreislaufs vereinfacht wird. Weiter wird hierdurch auch das Verhalten bei Temperaturen unterhalb 0 °C des Brennstoffzellensystems verbessert.

Bevorzugte MEEs erlauben überraschend, daß die Brennstoffzelle problemlos auf Raumtemperatur und darunter abgekühlt werden kann und danach wieder in Betrieb genommen werden kann, ohne an Leistung zu verlieren.

Des Weiteren erlaubt das Konzept der vorliegenden Erfindung eine besonders gute Ausnutzung der Katalysatoren, insbesondere der eingesetzten Platinmetalle. Hierbei ist zu bedenken, dass bei herkömmlichen Konzepten ein Teil der mit Platin beschichteten Gasdiffusionsschichten durch Dichtungsmaterialien abgedeckt wird und nicht daher keine katalytische Wirkung hat.

Des Weiteren können Kosten, die durch die Verwendung von Dichtungsmaterialien entstehen, eingespart werden.

Des weiteren zeigen die bevorzugten MEEs der vorliegenden Erfindung eine sehr hohe Langzeitstabilität. Es wurde festgestellt, daß eine erfindungsgemäße Brennstoffzelle über lange Zeiten z.B. mehr als 5000 Stunden bei Temperaturen von mehr als 120 °C mit trockenen Reaktionsgasen kontinuierlich betrieben werden kann, ohne daß eine merkliche Leistungsdegradation feststellbar ist. Die dabei erzielbaren Leistungsdichten sind auch nach einer derartig langen Zeit sehr hoch.

Hierbei zeigen die erfindungsgemäßen Brennstoffzellen auch nach langer Zeit, beispielsweise mehr als 5000 Stunden eine hohe Ruhespannung, die nach dieser Zeit vorzugsweise mindestens 900 mV, besonderes bevorzugt mindestens 920 mV. Zur Messung der Ruhespannung wird eine Brennstoffzelle mit einem Wasserstoff-Fluss auf der Anode und einem Luft-Fluss auf der Kathode stromlos betrieben. Die Messung erfolgt, indem die Brennstoffzelle von einem Strom von 0.2 A/cm² auf den stromlosen Zustand geschaltet wird und dann dort 2 Minuten die Ruhespannung aufgezeichnet wird. Der Wert nach nach 5 Minuten ist das entsprechende Ruhepotential. Die gemessenen Werte der Ruhespannung gelten für eine Temperatur von 160°C. Darüber hinaus zeigt die Brennstoffzelle nach dieser Zeit vorzugsweise einen geringen Gasdurchtritt (gas-cross-over). Zur Messung des Cross-overs wird die Anodenseite der Brennstoffzelle mit Wasserstoff (5 L/h) betrieben, die Kathode mit Stickstoff (5L/h). Die Anode dient als Referenz- und Gegenelektrode. Die Kathode als Arbeitselektrode. Die Kathode wird auf ein Potential von 0.5 V gesetzt und der durch die Membran diffundierende Wasserstoff an der Kathode massentransport-limitiert oxidiert. Der resultierende Strom ist ein Maß für die Wasserstoff- Permeationsrate. Der Strom ist <3 mA/cm², bevorzugt <2mA/cm², besonders bevorzugt <1 mA/cm² in einer 50 cm² Zelle. Die gemessenen Werte des H2-cross-overs gelten für eine Temperatur von 160°C.

Darüber hinaus können die erfindungsgemäßen MEEs kostengünstig und einfach hergestellt werden.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

Nachfolgend wird die vorliegende Erfindung durch ein Beispiel und ein Vergleichsbeispiel näher erläutert, ohne dass hierdurch eine Beschränkung erfolgen soll.

### Herstellung einer PBI-Lösung

Zu einem Gemisch aus 3,1 g Terephthalsäure und 4,0 g 3,3',4,4'-Tetraaminobiphenyl wurde 350 g Polyphosphorsäure (PPA) in einem Dreihalskolben gegeben, welcher mit mechanischem Rührer, N₂-Einlass und Auslass ausgestattet ist. Die Mischung wurde erst auf 150°C für 1 h lang, dann auf 170°C für 10h, danach 195°C 7h und anschließend bei 220°C 4h lang unter Rühren erhitzt.

Ein kleiner Teil der Lösung wurde mit Wasser ausgefallen. Das ausgefallene Harz wurde filtriert, dreimal mit H₂O gewaschen, mit Ammoniumhydroxid neutralisiert, dann mit H₂O gewaschen und bei 100°C 24h lang bei 0,001 bar getrocknet. Aus einer 0,2 g/dL Polymerlösung in 100 ml 96%-igen H₂SO₄ wurde die inhärente Viskosität ηᵢₙₕ gemessen. ηᵢₙₕ = 6,4 dL/g bei 30°C

### Beispiel 1

Aus der zuvor dargelegten PBI-Lösung wurde eine Membran hergestellt. Hierfür wurde die erhaltene Mischung bei dieser Temperatur mit vorgeheizten Rakelgerät auf einer Glassplatte mit einer Dicke von 1150 µm gerakelt. Die Membran wurde auf die Raumtemperatur abgekühlt und dann in einem 2L 50%-ige H₃PO₄-Bad 24h lang bei RT hydrolysiert. Die Dicke der hydrolysierten Membran betrug 1000 µm.

Die so erhaltene Membran wurde zur Herstellung einer Membran-Elekroden-Einheit eingesetzt. Die Fläche der Membran betrug 100mm*100mm. Die Membran wurde zwischen eine Anode und eine Kathode gelegt und bei 160°C auf eine Gesamtdicke von 980 µm verpresst.

Als Anode wurde eine Katalysator beschichtete Diffusionsschicht aus Graphitgewebe eingesetzt. Der Anodenkatalysator ist Pt geträgert auf Kohlenstoff. Die Elektrodenbeladung beträgt 1 mg_{Pt}/cm².

Als Kathode wurde eine Katalysator beschichtete Diffusionsschicht aus Graphitgewebe eingesetzt. Der Kathodenkatalysator ist Pt geträgert auf Kohlenstoff. Die Elektrodenbeladung beträgt 1 mg_{Pt}/cm².

Als Abstandshalter wurde ein Rahmen aus Perfluoralkoxypolymer (PFA) eingesetzt, der die Membran-Elektroden-Einheit umgibt.

Die aktive MEA-Fläche ist 50 cm² und die Gesamtfläche 100 cm². Die Dicke der Membran im Innenbereich betrug im Mittel 190µm, die im Außenbereich im Mittel 363µm. Diese Werte wurden durch Auswertung von Aufnahmen gewonnen, die mit Rasterelektronenmikroskopie (REM) erhalten wurden.

Die Leistungen der Membran wurde gemäß den zuvor dargelegten Verfahren gemessen. Die erhaltenen Ergebnisse sind in Tabelle 1 dargelegt.

### Vergleichsbeispiel 1

Aus der zuvor dargelegten PBI-Lösung wurde eine Membran hergestellt. Hierfür wurde die erhaltene Mischung zu einer Membran mit der Dicke von 300 µm verarbeitet und 72 mm x 72 mm Fläche zur Herstellung einer MEA verwendet.

Als Anode wurde eine Katalysator beschichtete Diffusionsschicht aus Graphitgewebe eingesetzt, wobei die Anode mit Kaptonfilm (25 µm) Subgasket eingerahmt ist. Der Anodenkatalysator ist Pt geträgert auf Kohlenstoff. Die Elektrodenbeladung beträgt 1 mgPt/cm².

Als Kathode wurde eine Katalysator beschichtete Diffusionsschicht aus Graphitgewebe eingesetzt, wobei die Kathode mit Kaptonfilm (25 µm) Subgasket eingerahmt ist. Der Kathodenkatalysator ist Pt geträgert auf Kohlenstoff. Die Elektrodenbeladung beträgt 1 mgPt/cm². Die Randabdichtung wurde aus herkömmliche Weise mit einer Dichtung aus PFA erzielt.

Die Membran wurde zwischen Anode und Kathode gelegt und bei 160°C auf eine Gesamtdicke von 980 µm verpresst. Die aktive MEA-Fläche ist 50 cm².

Die Leistungen der Membran wurde gemäß den zuvor dargelegten Verfahren gemessen. Die erhaltenen Ergebnisse sind in Tabelle 1 dargelegt.

**Tabelle 1**

| | Beispiel | Vergleichprobe |
|---|---|---|
| Ruhespannung [mV] | 930 | 915 |
| [mV] @ 0,2 A/cm² | 645 | 645 |

| | | |
|---|---|---|
| T: 160°C; p: 1 barₐ | | |

## Patentansprüche

1. Membran-Elektroden-Einheit aufweisend zwei Gasdiffusionsschichten, die jeweils mit einer Katalysatorschicht in Kontakt stehen, die durch eine Polymer-Elektrolyt-Membran getrennt werden, wobei die Polymer-Elektrolyt-Membran einen inneren Bereich, der in Kontakt mit einer Katalysatorschicht steht, und einen äußeren Bereich, der nicht auf der Oberfläche einer Gasdiffusionsschicht vorgesehen ist, aufweist, **dadurch gekennzeichnet, dass** die Dicke des inneren Bereichs der Membran 15 bis 1000µm beträgt und bei einem Druck von 5 N/mm² über einen Zeitraum von 10 Minuten mindestens 5% abnimmt und die Dicke der Membran im äußeren Bereich 120 bis 2000µm beträgt und größer ist als die Dicke des inneren Bereichs der Membran und die Membran basische Polymere und Phosphorsäure umfasst.

2. Membran-Elektroden-Einheit gemäß Anspruch 1, **dadurch gekennzeichnet, dass** die vier Kantenflächen der zwei Gasdiffusionsschichten mit der Polymer-Elektrolyt-Membran in Kontakt stehen.

3. Membran-Elektroden-Einheit gemäß Anspruch 1 oder 2, **dadurch gekennzeichnet, dass** der äußere Bereich einen einschichtigen Aufbau aufweist.

4. Membran-Elektroden-Einheit gemäß Anspruch 1 oder 2, **dadurch gekennzeichnet, dass** der äußere Bereich der Polymer-Elektrolyt-Membran mindestens eine weitere Schicht aufweist.

5. Membran-Elektroden-Einheit gemäß Anspruch 4, **dadurch gekennzeichnet, dass** der äußere Bereichs der Polymer-Elektrolyt-Membran mindestens eine Polymerschicht aufweist, die schmelzbar ist.

6. Membran-Elektroden-Einheit gemäß Anspruch 5, **dadurch gekennzeichnet, dass** die Polymerschicht Fluorpolymere umfasst.

7. Membran-Elektroden-Einheit gemäß einem oder mehreren der vorhergehenden Ansprüche, **dadurch gekennzeichnet, dass** das Verhältnis der Dicke des äußeren Bereichs zur Dicke des inneren Bereichs der Polymer-Elektrolyt-Membran im Bereich bis 200:1 liegt.

8. Membran-Elektroden-Einheit gemäß einem oder mehreren der vorhergehenden Ansprüche, **dadurch gekennzeichnet, dass** die zwei Katalysatorschichten jeweils eine elektrochemisch aktive Fläche aufweisen, deren Größe mindestens 2 cm² beträgt.

9. Membran-Elektroden-Einheit gemäß einem oder mehreren der vorhergehenden Ansprüche, **dadurch gekennzeichnet, daß** die Polymer-Elektrolyt-Membran Polyazole umfaßt.

10. Membran-Elektroden-Einheit gemäß Anspruch 1, **dadurch gekennzeichnet, daß** die Konzentration der Phosphorsäure mindestens 50 Gew.-% beträgt.

11. Membran-Elektroden-Einheit gemäß einem oder mehreren der vorhergehenden Ansprüche, **dadurch gekennzeichnet, daß** die Membran durch ein Verfahren erhältlich ist umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.
D) Behandlung der in Schritt C) gebildeten Membran (bis diese selbsttragend ist).

12. Membran-Elektroden-Einheit gemäß Anspruch 10 oder 11, **dadurch gekennzeichnet, daß** der Dotierungsgrad zwischen 3 und 50 beträgt.

13. Membran-Elektroden-Einheit gemäß einem oder mehreren der vorhergehenden Ansprüche, **dadurch gekennzeichnet, daß** mindestens eine der Elektroden aus einem kompressiblen Material ist.

14. Membran-Elektroden-Einheit gemäß einem oder mehreren der vorhergehenden Ansprüche, **dadurch gekennzeichnet, dass** diese mindestens einen Abstandshalter aufweist.

15. Membran-Elektroden-Einheit gemäß Anspruch 14, **dadurch gekennzeichnet, dass** der Abstandshalter einen Rahmen bildet.

16. Membran-Elektroden-Einheit gemäß Anspruch 14 oder 15, **dadurch gekennzeichnet, dass** die Dicke des Abstandshalters 50 bis 100 %, bezogen auf die Dicke aller Komponenten des inneren Bereichs der Membran-Elektroden-Einheit, beträgt.

17. Membran-Elektroden-Einheit gemäß Anspruch 14, 15 oder 16, **dadurch gekennzeichnet, dass** der Abstandshalter Polyphenylene, Phenolharze, Phenoxy-Harze, Polysulfidether, Polyphenylensulfide, Polyethersulfone, Polyimine, Polyetherimine, Polyazole, Polybenzimidazole, Polybenzoxazole, Polybenzthiazole, Polybenzoxadiazole, Polybenztriazole, Polyphosphazene, Polyetherketone, Polyketone, Polyetheretherketone, Polyetherketonketone, Polyphenylenamide, Polyphenyleneoxide, Polyimiden und Mischungen von zwei oder mehr dieser Polymere umfasst.

18. Brennstoffzelle aufweisend mindestens eine Membran-Elektroden-Einheit gemäß einem oder mehreren der Ansprüche 1 bis 13.

19. Brennstoffzelle gemäß Anspruch 18, **dadurch gekennzeichnet, dass** die Brennstoffzelle mindestens einen Abstandshalter umfasst.

20. Brennstoffzelle gemäß Anspruch 19, **dadurch gekennzeichnet, dass** der Abstandshalter einen Rahmen bildet, der die Membran-Elektroden-Einheit umgibt.

## Claims

1. A membrane electrode unit which having two gas diffusion layers, each contacted with a catalyst layer, which are separated by a polymer electrolyte membrane, wherein the polymer electrolyte membrane has an inner area which is contacted with a catalyst layer, and an outer area which is not provided on the surface of a gas diffusion layer, **characterized in that** the thickness of the inner area of the membrane is 15 to 1000µm and decreases over a period of 10 minutes by at least 5% at a pressure of 5 N/mm² and the thickness of the membrane in the outer area is 120 to 2000 µm and is greater than the thickness of the inner area of the membrane and the membrane comprises basic polymers and phosphor acid.

2. The membrane electrode unit according to claim 1, **characterized in that** the four edges of the two gas diffusion layers are contacted with the polymer electrolyte membrane.

3. The membrane electrode unit according to claim 1 or 2, **characterized in that** the outer area has a monolayer structure.

4. The membrane electrode unit according to claim 1 or 2, **characterized in that** the outer area of the polymer electrolyte membrane has at least one more layer.

5. The membrane electrode unit according to claim 4, **characterized in that** the outer area of the polymer electrolyte membrane has at least one polymer layer which is meltable.

6. The membrane electrode unit according to claim 5, **characterized in that** the polymer layer comprises fluoropolymers.

7. The membrane electrode unit according to one or more of the preceding claims, **characterized in that** the ratio of the thickness of the outer area to the thickness of the inner area of the polymer electrolyte membrane is in the range of 1:1 to 200:1.

8. The membrane electrode unit according to one or more of the preceding claims, **characterized in that** the each of the two catalyst layers has an electrochemically active surface area, the size of which is at least 2 cm².

9. The membrane electrode unit according to one or more of the preceding claims, **characterized in that** the polymer electrolyte membrane comprises polyazoles.

10. The membrane electrode unit according to claim 1, **characterized in that** the concentration of the phosphoric acid is at least 50% by weight.

11. The membrane electrode unit according to one or more of the preceding claims, **characterized in that** the membrane can be obtained by a process comprising the steps of
A) mixing one or more aromatic tetraamino compounds with one or more aromatic carboxylic acids or their esters, which contain at least two acid groups per carboxylic acid monomer, or mixing one or more aromatic and/or heteroaromatic diaminocarboxylic acids in polyphosphoric acid with formation of a solution and/or dispersion,
B) applying a layer using the mixture in accordance with step A) to a support or to an electrode,
C) heating the flat structure/layer obtainable in accordance with step B) under inert gas to temperatures of up to 350°C, preferably up to 280°C, with formation of the polyazole polymer,
D) treatment of the membrane formed in step C) (until it is self-supporting).

12. The membrane electrode unit according to claims 10 or 11, **characterized in that** the degree of doping is between 3 and 50.

13. The membrane electrode unit according to one or more of the preceding claims, **characterized in that** at least one of the electrodes is made of a compressible material.

14. The membrane electrode unit according to one or more of the preceding claims, **characterized in that** it has at least one spacer.

15. The membrane electrode unit according to claim 14, **characterized in that** the spacer forms a frame.

16. The membrane electrode unit according to claims 14 or 15, **characterized in that** the thickness of the spacer is 50 to 100%, based on the thickness of all components of the inner area of the membrane electrode unit.

17. The membrane electrode unit according to claim 14, 15 or 16, **characterized in that** the polymer layer comprises polyphenylenes, phenol resins, phenoxy resins, polysulphide ether, polyphenylenesulphide, polyethersulphones, polyimines, polyetherimines, polyazoles, polybenzimidazoles, polybenzoxazoles, polybenzothiazoles, polybenzoxadiazoles, polybenzotriazoles, polyphosphazenes, polyether ketones, polyketones, polyether ether ketones, polyether ketone ketones, polyphenylene amides, polyphenylene oxides, polyimides and mixtures of two or more of these polymers.

18. A fuel cell having at least one membrane electrode unit according to one or more of claims 1 to 13.

19. The fuel cell according to claim 18, **characterized in that** the fuel cell comprises at least one spacer.

20. The fuel cell according to claim 19, **characterized in that** the spacer forms a frame which surrounds the membrane electrode unit.

## Revendications

1. Unité d'électrode de membrane présentant deux couches de diffusion gazeuse respectivement en contact avec une couche du catalyseur séparées par une membrane électrolyte polymère, sachant que la membrane électrolyte polymère présente un secteur interne en contact avec une couche du catalyseur et un secteur externe qui n'est pas prévu sur la superficie d'une couche de diffusion gazeuse, **caractérisée en ce que** l'épaisseur du secteur interne de la membrane est de 15 à 1000 µm et sous l'effet d'une pression de 5 N/mm² sur une durée de 10 minutes, diminue au moins de 5% et l'épaisseur de la membrane du secteur externe est de 120 à 2000 um et est supérieure à l'épaisseur du secteur interne de la membrane et la membrane comprend des polymères basiques et de l'acide phosphorique.

2. Unité d'électrode de membrane selon revendication 1, **caractérisée en ce que** les quatre surfaces de chant des deux couches de diffusion gazeuse sont en contact avec la membrane électrolyte polymère.

3. Unité d'électrode de membrane selon revendication 1 ou 2, **caractérisée en ce que** le secteur externe présente une structure à une couche.

4. Unité d'électrode de membrane selon revendication 1 ou 2, **caractérisée en ce que** le secteur externe de la membrane électrolyte polymère présente au moins une autre couche.

5. Unité d'électrode de membrane selon revendication 4, **caractérisée en ce que** le secteur externe de la membrane électrolyte polymère présente au moins une couche polymère, qui est fusible.

6. Unité d'électrode de membrane selon revendication 5, **caractérisée en ce que** la couche polymère comprend des fluoropolymères.

7. Unité d'électrode de membrane selon l'une ou plusieurs revendications précédentes, **caractérisée en ce que** le rapport de l'épaisseur du secteur externe avec l'épaisseur du secteur interne de la membrane électrolyte polymère est de l'ordre de 200:1.

8. Unité d'électrode de membrane selon l'une ou plusieurs revendications précédentes, **caractérisée en ce que** les deux couches de catalyseurs présentent respectivement une surface électrochimiquement active, dont la dimension est de 2 cm2.

9. Unité d'électrode de membrane selon l'une ou plusieurs revendications précédentes, **caractérisée en ce que** la membrane électrolyte polymère comprend des polyazoles.

10. Unité d'électrode de membrane selon revendication 1, **caractérisée en ce que** la concentration en acide phosphorique est d'au moins 50 % en poids.

11. Unité d'électrode de membrane selon lesune ou plusieurs revendications précédentes, **caractérisée en ce que** la membrane peut être obtenue par un procédé comprenant les étapes
A) Mélange d'une ou plusieurs liaisons tétra-amino-aromatiques avec un ou plusieurs acides carboxyliques aromatiques ou leurs esters, qui contiennent au moins deux groupes d'acide par monomère d'acide carboxylique ou mélange d'un ou plusieurs acides diamino-carboxyliques aromatiques et / ou hétéroaromatiques, dans acide polyphosphorique sous formation d'une solution et / ou dispersion.
B) Pose d'une couche en utilisant le mélange selon étape A) sur un support ou une électrode,
C) Réchauffement de la formation/couche plane pouvant être obtenue selon l'étape B) sous gaz inerte à des températures atteignant 350°C, de préférence allant jusqu'à 280 °C sous formation du polymère polyazole.
D) Traitement de la membrane formée dans l'étape C) (jusqu'à ce qu'elle soit autoporteuse).

12. Unité d'électrode de membrane selon revendication 10 ou 11, **caractérisée en ce que** le degré de dopage est compris entre 3 et 50.

13. Unité d'électrode de membrane selon l'une ou plusieurs revendications précédentes, **caractérisée en ce qu'**au moins l'une des électrodes est faite d'un matériau compressible.

14. Unité d'électrode de membrane selon l'une ou plusieurs revendications précédentes, **caractérisée en ce qu'**elle présente au moins un séparateur.

15. Unité d'électrode de membrane selon revendication 14, **caractérisée en ce que** le séparateur forme un cadre

16. Unité d'électrode de membrane selon revendication 14 ou 15, **caractérisée en ce que** l'épaisseur du séparateur est de 50 à 100% en par rapport à l'épaisseur de tous les composants du secteur interne de l'unité d'électrode de membrane.

17. Unité d'électrode de membrane selon au moins revendication 14, 15 ou 16, **caractérisée en ce que** le séparateur comprend polyphénylènes, résines phénoliques, résines phénoxy, éther polysulfide, sulfides de polyphénylène, polyéthers sulfone, polyimines, polyétherimines, polyazoles, polybenzimidazoles, polybenzoxazole, polybenzthiazole, polybenzoxadiazole, polybenztriazoles, polyphosphazènes, polyéthers cétone, polycétones, polyéthers éther cétone, polyéthers cétone cétone, amides de polyphénylène, oxydes de polyphénylène, polyimides et mélanges de deux ou plus de ces polymères.

18. Pile à combustible présentant au moins une unité d'électrode de membrane selon une ou plusieurs revendications 1 à 13.

19. Pile à combustible selon revendication 18, **caractérisée en ce que** la pile à combustible comprend au moins un séparateur.

20. Pile à combustible selon revendication 19, **caractérisée en ce que** le séparateur forme un cadre qui enveloppe l'unité d'électrode de membrane.
